# EUROPEAN PATENT APPLICATION

(11) **EP 4 755 587 A1**
(43) Date of publication of application: **10.06.2026**
(21) Application number: 24856574.9
(22) Date of filing: 27.03.2024
(51) Int. Cl.: B25J 5/00, B25J 9/16, B25J 13/08, B25J 19/00, B25J 19/02, B25J 19/06, B62D 57/028, B62D 63/02

(54) **ROBOTIC CLEANER**

(30) Priority: 24.08.2023 KR 20230111266
(71) Applicant: LG Electronics Inc., Yeongdeungpo-gu Seoul 07336 (KR)
(72) Inventor: KWAK, Donghoon, Seoul 08592 (KR)
(74) Representative: Vossius & Partner Patentanwälte Rechtsanwälte mbB
(86) International application number: PCT/KR2024/003848
(87) International publication number: WO 2025/041954

(57) **Abstract**

A robot capable of accurately and promptly detecting a situation where the robot is lifted by an external force or falls to the ground due to a loss of center of gravity is disclosed. According to an embodiment, the robot includes a robot body, a pair of wheel units including wheels that perform rolling travel while in contact with a ground, a pair of leg units connected between the robot body and the wheel units, and a control unit configured to determine an unsafe state and perform safety control. The control unit increases a safety count when a preset condition corresponding to each of a plurality of sensing parameters is satisfied. At a second time point (t2) when the safety count reaches a predetermined value, the control unit determines the unsafe state and performs safety control. A time required from a first time point (t1) to the second time point (t2) varies depending on a type and a number of the sensing parameters for which a counting situation is detected.

## Description

### [Technical Field]

The present invention relates to a robot and a method for controlling a robot. More particularly, the present invention relates to a robot capable of accurately and promptly detecting a situation where the robot is lifted by an external force or falls to the ground due to a loss of center of gravity. Furthermore, the present invention relates to a vacuum cleaner.

### [Background Art]

With the recent advancements in robotic technology, the use of robots has been increasing in households as well as in industrial fields.

Domestic robots (home robots) include robots that perform household chores, such as cleaning, or control home appliances. They also include robots that serve as a user's assistant or provide educational services using Artificial Intelligence (AI), or robots that act as a substitute for pets.

Robots include stationary robots that perform functions at a fixed location, as well as mobile robots that are capable of moving. In particular, for robots used in the home, mobile robots that move around the house to assist or follow the user are primarily utilized.

Among such mobile robots, two-wheeled robots have the advantage of being easy to store because they occupy a small footprint on the ground. Additionally, they have a small turning radius when changing directions, making them particularly suitable for use in homes where space is relatively confined.

Such a two-wheeled robot typically has a structure in which a robot body and wheels are connected through leg units extending vertically. That is, since the relatively heavy robot body is positioned at the upper portion, the center of gravity is located at a high position.

Furthermore, the two-wheeled robot maintains a basic posture in which two wheels perform rolling travel while in contact with the ground. At this time, the robot may deviate from the basic posture due to various reasons.

For example, if necessary, a user may lift the robot in a direction opposite to the direction of gravity, i.e., in an upward direction. In this case, at least one of the two wheels is separated from the ground.

Alternatively, for example, the robot may lose the balance of its center of gravity maintained in the basic posture and fall to the ground. This is because the robot can easily tilt in forward, backward, left, or right directions due to the structure in which the center of gravity is positioned high. In this case, an angle between the robot body and the ground deviates from a predetermined tilt angle.

In the above-described situations, there is a risk of causing injury to the user if the wheels of the robot continue to drive without stopping. Hereinafter, the state of the robot in such a situation is referred to as an "unsafe state." In the case of such an unsafe state, control for ensuring the safety of the user must be performed; therefore, it is very important to accurately detect various situations leading to the unsafe state and promptly perform safety control.

As a prior art document related to a lift detection technology for an autonomous mobile robot (hereinafter, Prior Art Document 1), Korean Patent Registration No. 0657530 is presented.

The autonomous mobile robot disclosed in Prior Art Document 1 includes a sensing protrusion and a sensing unit formed on a driving unit composed of a mounting member, a wheel, a spring, and a sliding tube. When the mounting member is lifted by a user, a spring disposed inside the sliding tube is extended so that the sensing protrusion and the sensing unit come into contact with each other. As a controller receives this input, the lifted state of the robot can be detected.

However, Prior Art Document 1 can detect a lifted state of the robot only when a user holds and lifts the mounting member. It is difficult to detect the lifted state in other situations. For example, if the user lifts the lower portion of the robot-that is, in a situation where the spring is not extended-the lifted state of the robot cannot be detected.

Another prior art document related to a lift detection technology for an autonomous mobile robot (hereinafter, Prior Art Document 2), Korean Patent Registration No. 2303546, is presented.

Prior Art Document 2 relates to a robotic cleaner including a rotating spin mop and further includes a sensor unit for detecting lifting of the robotic cleaner. The sensor unit includes a tilt sensor module configured to detect tilt information, a distance sensor module configured to detect distance information from a floor surface, and a light intensity sensor module configured to detect light intensity information reflected from the floor surface. Whether the robot is lifted is determined using at least one of the tilt information, the distance information, and the light intensity information.

However, Prior Art Document 2 relates to a robotic cleaner having a low center of gravity and lacking leg units. Therefore, it is difficult to apply Prior Art Document 2 to detect various unsafe situations of a two-wheeled robot, which has a high center of gravity and is prone to toppling over in forward, backward, left, or right directions, and includes leg units having a joint structure where the coupling angle between upper and lower links changes.

### [Summary of Invention]

### [Technical Problem]

An object of the present invention is to provide a robot capable of detecting a fall (toppling over) of a robot that travels while maintaining balance.

Another object of the present invention is to provide a robot capable of detecting an unsafe state in various situations where normal travel can no longer be maintained-including the aforementioned fall state and a state where the robot is lifted from the ground-by utilizing various sensing parameters.

Still another object of the present invention is to provide a robot capable of accurately detecting the unsafe state without error by: categorizing control parameters related to robot travel into "primary sensing parameters" and "auxiliary sensing parameters" based on whether a parameter alone can detect an unsafe state; and determining whether to increase a safety count according to the type of the detected parameter.

Yet another object of the present invention is to provide a robot capable of promptly detecting an unsafe state and performing safety control by: setting an increment of the safety count to be larger when a detected parameter is a primary sensing parameter than when an auxiliary sensing parameter is detected.

### [Technical Solution]

To achieve the above object, a robot according to an embodiment of the present invention includes: a robot body in which a battery is accommodated; a pair of wheel units disposed at a lower portion of the robot body and including wheels that perform rolling travel while in contact with a ground; a pair of leg units connected between the robot body and the wheel units; and a control unit configured to determine whether the robot is in an unsafe state by measuring a plurality of sensing parameters at a predetermined time interval from a first time point (t1) and to perform a preset safety control. The control unit is configured to: detect a counting situation and increase a safety count when a preset condition corresponding to each of the sensing parameters is satisfied at every measurement interval of the sensing parameters; and determine that the robot is in the unsafe state and perform the safety control at a second time point (t2) when the safety count becomes greater than or equal to a predetermined value. A time required from the first time point (t1) to the second time point (t2) may vary depending on a type and a number of the sensing parameters for which the counting situation is detected.

The unsafe state may be a state in which at least one of the wheels is separated from the ground, or a state in which the robot body deviates from a predetermined tilt angle.

The control unit may vary an increment of the safety count according to the type of the sensing parameters.

The sensing parameters may include a primary sensing parameter and an auxiliary sensing parameter.

At this time, the control unit may increase the safety count when a counting situation for the primary sensing parameter is detected, and may increase the safety count when a counting situation for the auxiliary sensing parameter is detected only when the counting situation is detected together with another sensing parameter.

At this time, the control unit may increase the safety count by a larger amount when a counting situation for the primary sensing parameter is detected than when a counting situation for the auxiliary sensing parameter is detected.

The robot further includes a tilt sensor disposed on the robot body and configured to measure a tilt angle of the robot body, wherein the sensing parameters may include the tilt angle of the robot body.

The control unit may detect the counting situation when the tilt angle of the robot body is greater than a preset angle.

The robot further includes a suspension motor disposed in the robot body and driven to maintain a coupling angle between an upper link and a lower link constituting the leg unit within a predetermined coupling angle range, wherein the sensing parameters may include a load current value of the suspension motor.

The control unit may detect the counting situation when the load current value of the suspension motor is greater than or equal to a preset current value.

The robot further includes a wheel motor disposed in the wheel unit and driven to rotate the wheel, wherein the sensing parameters may include a load current value of the wheel motor.

The control unit may detect the counting situation when the load current value of the wheel motor is less than or equal to a preset current value.

The robot further includes a cliff sensor disposed in the wheel unit or the leg unit and configured to measure a distance from the ground, wherein the sensing parameters may include the distance from the ground.

The control unit may detect the counting situation when the distance from the ground is greater than or equal to a preset distance.

The safety control may include a control for stopping the rotation of the wheel.

According to another embodiment of the present invention, a robot includes: a robot body in which a battery is accommodated; a pair of wheel units disposed at a lower portion of the robot body and including wheels that perform rolling travel while in contact with a ground; and a control unit configured to determine whether the robot is in an unsafe state by measuring a plurality of sensing parameters at a predetermined interval and to perform a preset safety control. The sensing parameters include a primary sensing parameter and an auxiliary sensing parameter. The control unit is configured to: detect a counting situation and increase a safety count when a preset condition corresponding to each of the sensing parameters is satisfied; and determine that the robot is in the unsafe state when the safety count becomes greater than or equal to a predetermined value. The control unit increases the safety count when a counting situation for the primary sensing parameter is detected, and increases the safety count when a counting situation for the auxiliary sensing parameter is detected only when the counting situation is detected together with another sensing parameter.

### [Advantageous Effects]

According to the present invention, it is possible to detect an unsafe state in various situations where normal travel can no longer be maintained such as a state in which the robot falls or a state in which the robot is lifted from the ground by utilizing various sensing parameters.

In addition, according to the present invention, control parameters related to robot travel are categorized into primary sensing parameters and auxiliary sensing parameters based on whether a parameter alone is capable of detecting an unsafe state. By determining whether to increase a safety count according to the type of the detected parameter, it is possible to accurately detect the unsafe state without error.

Furthermore, according to the present invention, when a detected parameter is a primary sensing parameter, an increment of the safety count is set to be larger than when an auxiliary sensing parameter is detected. This allows for prompt detection of the unsafe state and swift execution of safety control.

### [Brief Description of Drawings]

FIG. 1 is a perspective view for explaining a robot according to an embodiment of the present invention.
FIG. 2 is a front view of a robot according to an embodiment of the present invention.
FIG. 3 is a perspective view of a robot according to an embodiment of the present invention, viewed from a different angle.
FIG. 4 is a partially cutaway view for explaining power transmission for rotating an arm in a robot according to an embodiment of the present invention.
FIG. 5 is a plan view of a robot according to an embodiment of the present invention.
FIG. 6 is a view for explaining an arm of a robot according to another embodiment of the present invention.
FIG. 7 is a view for explaining a state in which a detachable part of the arm in FIG. 6 is rotated.
FIG. 8 is a bottom view of a robot according to an embodiment of the present invention.
FIG. 9 is a block diagram for explaining a control configuration of a robot according to an embodiment of the present invention.
FIG. 10 is a view for explaining a coupling relationship between a robot mask and a robot body in a robot according to an embodiment of the present invention.
FIG. 11 is a side view of a robot according to an embodiment of the present invention.
FIGS. 12 to 20 illustrate various types of unsafe states that can be detected in an embodiment of the present invention.
FIGS. 21 and 22 are views for explaining cases that are not determined as an unsafe state in an embodiment of the present invention.

### [Description of Embodiments]

Hereinafter, preferred embodiments of the present invention will be described in detail with reference to the accompanying drawings.

As the present invention may be subject to various modifications and have several embodiments, specific embodiments are illustrated in the drawings and will be described in detail in the detailed description. However, this is not intended to limit the present invention to specific implementation forms, and it should be interpreted to include all modifications, equivalents, and substitutes included in the spirit and technical scope of the present invention.

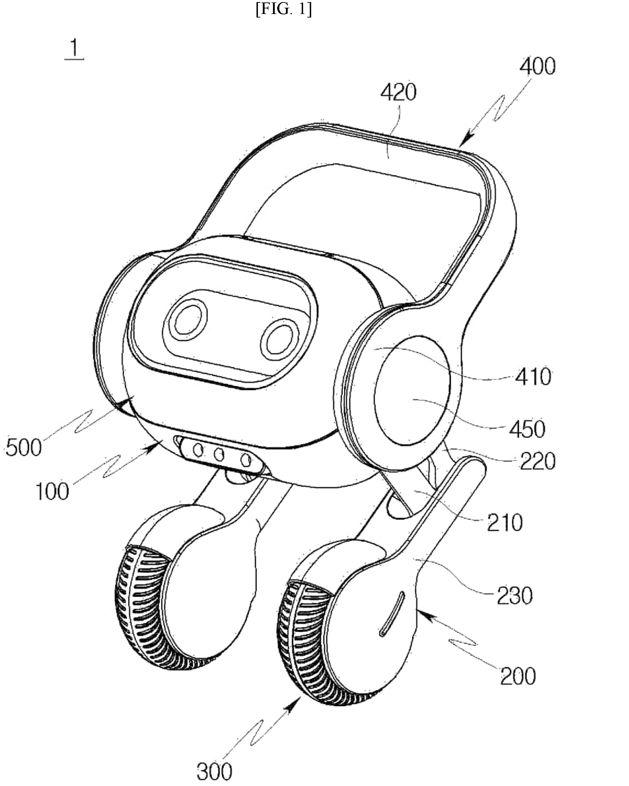

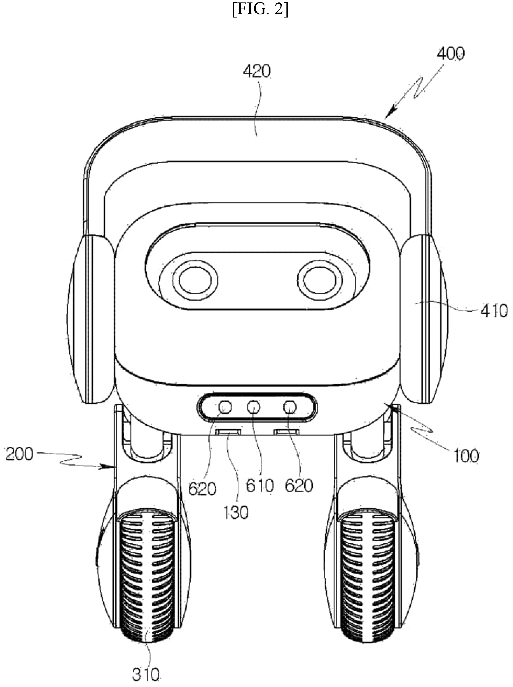

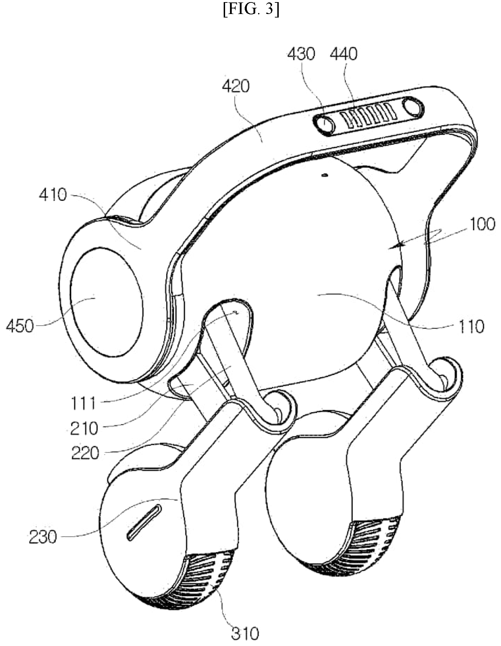

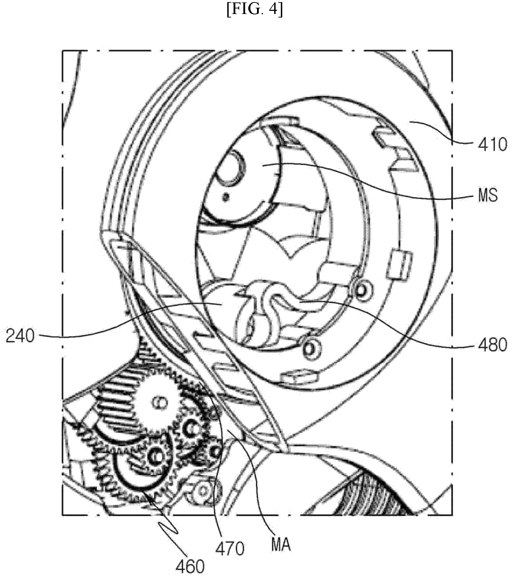

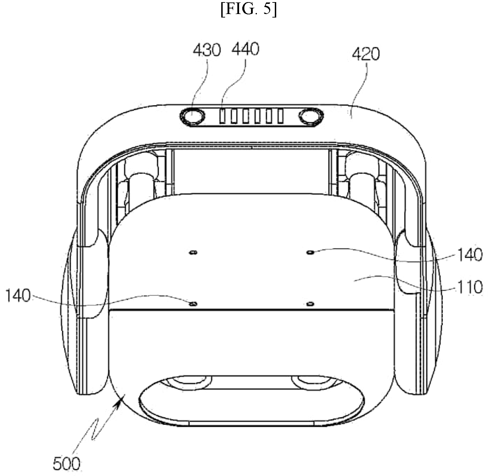

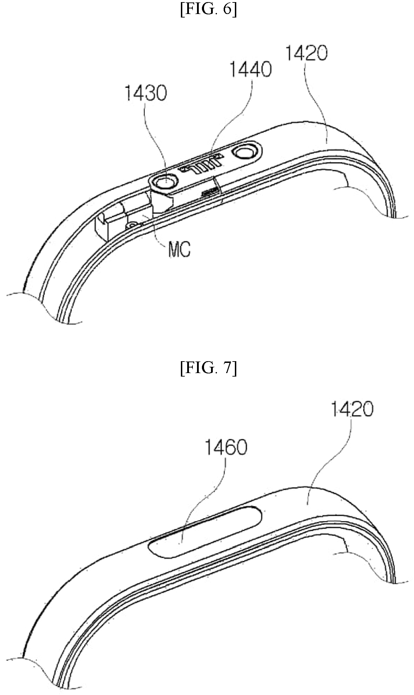

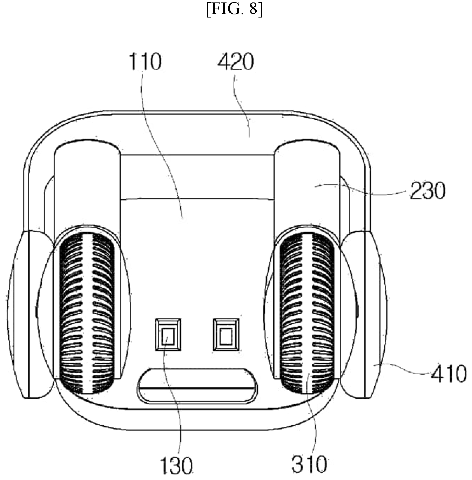

FIG. 1 is a perspective view for explaining a robot according to an embodiment of the present invention, FIG. 2 is a front view of a robot according to an embodiment of the present invention, and FIG. 3 is a perspective view of a robot according to an embodiment of the present invention, viewed from a different angle. FIG. 4 is a partially cutaway view for explaining power transmission for rotating an arm in a robot according to an embodiment of the present invention, FIG. 5 is a plan view of a robot according to an embodiment of the present invention, FIG. 6 is a view for explaining an arm of a robot according to another embodiment of the present invention, FIG. 7 is a view for explaining a state in which a detachable portion of the arm in FIG. 6 is rotated, and FIG. 8 is a bottom view of a robot according to an embodiment of the present invention.

A robot 1 according to an embodiment of the present invention will be described with reference to FIGS. 1 to 8.

The robot 1 according to an embodiment of the present invention is configured to be placed on a floor and move along a floor surface B. Accordingly, hereinafter, the vertical direction (up-and-down direction) will be defined and described based on a state in which the robot 1 is placed on the floor.

In addition, a side where a first camera 610a, which will be described later, is disposed is defined as a front of the robot 1. Furthermore, a direction opposite to the front is defined as a rear of the robot 1.

In an embodiment of the present invention, the "lowest portion" of each component may refer to a portion located at the lowest position in each component, or a portion closest to the floor, when the robot 1 according to the embodiment of the present invention is placed on the floor for use.

The robot 1 according to an embodiment of the present invention includes a robot body 100, a leg unit 200, a wheel unit 300, an arm 400, and a robot mask 500. At this time, the leg unit 200 is coupled to the robot body 100, and the wheel unit 300 is coupled to the leg unit 200. In addition, arms 400 are pivotally coupled to both side surfaces of the robot body 100. Further, the robot mask 500 is detachably coupled to the robot body 100.

### Robot Body

The robot body 100 in the robot 1 according to an embodiment of the present invention will be described with reference to FIGS. 1 to 8.

Various components forming the robot 1 may be coupled to the robot body 100. For example, the robot mask 500 may be detachably coupled to the robot body 100. Also, the arms 400 are pivotally coupled to the robot body 100. Specifically, the arms 400 are pivotally coupled to both end portions of the robot body 100. The robot body 100 may perform additional functions by being coupled to a functional module through the arms 400. In addition, the robot body 100 may implement a standby posture for power saving or a recovery posture for standing up when fallen, through the arms 400.

Some components forming the robot 1 may be accommodated inside the robot body 100.

A body housing 110 may form the exterior of the robot body 100. An internal space of the body housing 110 may accommodate one or more motors including a suspension motor MS, one or more sensors, and a battery 800.

Although not shown, at least one bumper may be provided inside the body housing 110.

The bumper may be provided to be relatively movable with respect to the body housing 110. For example, the bumper may be coupled to the body housing 110 so as to be reciprocally movable along a front-rear direction of the body housing 110.

The bumper may be coupled along a part of or the entire front edge portion of the body housing 110. In addition, the bumper may be disposed at an inner rear side of the body housing 110.

With such a configuration, when the robot 1 collides with another object or a person, the bumper absorbs an impact applied to the robot body 100, thereby protecting the robot body 100 and components accommodated inside the robot body 100.

A pair of leg units 200 are coupled to the inside of the body housing 110. The pair of leg units 200 may pass through the body housing 110 to be exposed to the outside.

Specifically, a first link 210 and a second link 220 may be rotatably coupled to the inside of the body housing 110. For example, a link frame (not shown) to which the first link 210 and the second link 220 are linked may be provided inside the body housing 110.

In addition, the suspension motor MS may be accommodated inside the body housing 110. For example, the suspension motor MS may be disposed on the link frame (not shown). The suspension motor MS may be connected to the first link 210.

A pair of leg guide holes 111 may be formed in the body housing 110. For example, the pair of leg guide holes 111 may be formed side by side along the front-rear direction of the body housing 110.

With such a configuration, the leg unit 200 can perform a rotational movement along the leg guide hole 111, and a rotational movement range of the leg unit 200 can be guided.

The body housing 110 may be formed in a shape having a horizontal width (or diameter) larger than a vertical height. For example, the body housing 110 may be formed in a shape similar to an ellipsoid.

Such a robot body 100 helps the robot 1 achieve a stable structure and provides a structure advantageous for maintaining balance while the robot 1 moves (travels).

The robot body 100 may be disposed vertically above a wheel 310, which will be described later. The load of the robot body 100 may be transmitted to the wheel 310 through the leg unit 200, and the wheel 310 may support the leg unit 200 and the robot body 100. With such a configuration, the wheel 310 can stably support the load of the robot body 100.

The robot body 100 may include a display 120. The display 120 may be coupled to the body housing 110. The display 120 may be formed in a flat plate shape. The display 120 may be disposed at a predetermined angle with respect to the ground. For example, the display 120 may be disposed at a position facing forward and upward. With such a configuration, when the robot 1 approaches a user, the display 120 is visible to the user looking at the robot 1.

Meanwhile, the display 120 may visually deliver information regarding an operating state of the robot 1 to the user.

The display 120 may be formed of any one of a Light Emitting Diode (LED), a Liquid Crystal Display (LCD), a Plasma Display Panel (PDP), and an Organic Light Emitting Diode (OLED).

Information such as operating time information of the robot 1 and power information of the battery 800 may be displayed on the display 120.

According to an embodiment, the display 120 may be an input unit 125. That is, a control command may be input to the display 120 from the user. For example, the display 120 may be a touch screen that visually shows the operating state and receives a control command from the user.

A facial expression of the robot 1 may be displayed on the display 120. Alternatively, eyes of the robot 1 may be displayed on the display 120. Through the shape of the face or the shape of the eyes displayed on the display 120, the current state of the robot 1 may be personified and expressed as emotions. For example, when the user returns home after going out, a smiling facial expression or a smiling eye shape may be displayed on the display 120. Accordingly, an effect can be obtained in which the user feels a sense of interaction with the robot 1.

A charging terminal 130 may be disposed on the body housing 110. For example, the charging terminal 130 may be disposed toward the ground. As an example, the charging terminal 130 may be disposed to face the ground. As another example, the charging terminal 130 may be disposed at a predetermined angle with respect to the ground. With such a configuration, when the robot 1 is coupled to a robot charging station (not shown), the charging terminal 130 may come into contact with a terminal provided at the robot charging station (not shown).

The charging terminal 130 may be electrically connected to the robot charging station (not shown). With such a configuration, the robot 1 may be supplied with power through the charging terminal 130. The power supplied to the charging terminal 130 may be supplied to a battery 800. In addition, the robot 1 may receive an electrical signal through the charging terminal 130. The electrical signal transmitted through the charging terminal 130 may be received by a control unit 700.

Meanwhile, a first camera 610a may be disposed at a front lower portion of the body housing 110. For example, the first camera 610a may be disposed on a centerline passing through a center of the body housing 110 in a left-right direction. With such a configuration, the first camera 610a may detect an object or a person positioned in front of the robot 1.

In addition, an IR sensor 620 may be disposed at the front lower portion of the body housing 110. For example, a pair of IR sensors 620 may be disposed in the left-right direction at a predetermined interval. With such a configuration, the IR sensor 620 can detect a position of a light source that generates infrared rays.

The IR sensor 620 may be disposed close to the first camera 610a. For example, the first camera 610a may be disposed between the pair of IR sensors 620.

### Leg Unit

A leg unit 200 in the robot 1 according to an embodiment of the present invention will be described with reference to FIGS. 1 to 8.

The leg unit 200 is coupled to the robot body 100 and is capable of supporting the robot body 100. For example, a pair of leg units 200 are provided and respectively coupled to the inside of the body housing 110. The pair of leg units 200 may be disposed symmetrically (line-symmetrically) with respect to each other. At this time, at least a portion of the leg unit 200 is disposed closer to the ground than the robot body 100 is. The leg unit 200 is disposed to connect the robot body 100 and the wheel 310.

Accordingly, the robot body 100 can travel in a state of standing on the ground by the pair of leg units 200. That is, gravity applied to the robot body 100 can be supported by the leg unit 200, and the height of the robot body 100 can be maintained.

The leg unit 200 includes a first link 210, a second link 220, and a third link 230. At this time, the first link 210 and the second link 220 are rotatably coupled to the robot body 100 and the third link 230, respectively. That is, the first link 210 and the second link 220 are link-coupled to the robot body 100 and the third link 230, respectively.

The first link 210 is link-coupled to the inner left and right sides of the robot body 100.

The first link 210 is connected to a suspension motor MS. For example, the first link 210 may be connected to a shaft of the suspension motor MS directly or through a gear. With such a configuration, the first link 210 receives driving force from the suspension motor MS.

The first link 210 is formed in a frame shape, wherein one side in a longitudinal direction is connected to the suspension motor MS, and the other side in the longitudinal direction is coupled to the third link 230. At this time, the one side of the first link 210 connected to the suspension motor MS may be disposed further from the ground than the other side coupled to the third link 230.

One side of the first link 210 is coupled to a leg support portion (not shown) provided inside the body housing 110. The first link 210 may be rotatably coupled to the leg support portion. For example, one side of the first link 210 may be formed in a disk shape or a circular plate shape. Accordingly, one side of the first link 210 may pass through the leg support portion to be connected to the suspension motor MS.

One side of the first link 210 is connected to the suspension motor MS. For example, the one side of the first link 210 may be fixedly coupled to a shaft of the suspension motor MS. With such a configuration, when the suspension motor MS is driven, the one side of the first link 210 may be rotated in conjunction with the rotation of the shaft of the suspension motor MS.

The other side of the first link 210 is rotatably coupled to the third link 230. For example, a through-hole may be formed at the other side of the first link 210. A shaft may be rotatably coupled through the through-hole. Both longitudinal end portions of the shaft may be coupled to the third link 230.

With such a configuration, the shaft may serve as an axis about which the first link 210 and/or the third link 230 are rotated. Accordingly, the first link 210 and the third link 230 may be connected to be relatively rotatable.

Although not shown, the leg unit 200 may further include a gravity compensation unit. The gravity compensation unit compensates for the robot body 100 descending vertically downward due to gravity. That is, the gravity compensation unit provides force to support the robot body 100.

For example, the gravity compensation unit may be a torsion spring. The gravity compensation unit may be wound to surround an outer circumferential surface of the first link 210. One end portion of the gravity compensation unit may be inserted into and fixedly coupled to the first link 210, and the other end portion of the gravity compensation unit may be inserted into and fixedly coupled to the third link 230.

The gravity compensation unit applies force (rotational force) in a direction in which an angle between the first link 210 and the third link 230 increases. For example, both end portions of the gravity compensation unit are pre-contracted so as to apply a restoring force in a direction in which an included angle between the first link 210 and the third link 230 increases. Accordingly, even when gravity is applied to the robot body 100 while the robot 1 is placed on the ground, the included angle between the first link 210 and the third link 230 can be maintained within a predetermined angle range.

With such a configuration, even if the suspension motor MS is not driven, the robot body 100 can be prevented from descending toward the ground. Therefore, there is an effect of maintaining the height of the robot body 100 at a predetermined distance or more from the ground while preventing energy loss caused by driving the suspension motor MS by means of the gravity compensation unit.

The second link 220 is link-coupled to the inner left and right sides of the robot body 100. For example, the second link 220 may be link-coupled to a leg support portion (not shown) provided inside the body housing 110. That is, the second link 220 may be coupled together to the leg support portion (not shown) to which the first link 210 is coupled.

The second link 220 is formed in a frame shape, wherein one side in a longitudinal direction is coupled to the leg support portion (not shown), and the other side in the longitudinal direction is coupled to the third link 230.

A wire may be accommodated in the second link 220. For example, a space capable of accommodating a wire may be formed inside the second link 220. Accordingly, power from the battery 800 can be supplied to the wheel unit 300 through the wire. Along with this, the wire can be prevented from being exposed to the outside.

One side of the second link 220 is rotatably coupled to the leg support portion. For example, although not shown, a shaft coupled to the leg support portion may be coupled through the one side of the second link 220. A hollow may be formed in the shaft. The wire may pass through the hollow. With such a configuration, the wire for supplying power from the battery 800 to a wheel motor MW can be prevented from being exposed to the outside.

The other side of the second link 220 is rotatably coupled to the third link 230. Specifically, the other end portion of the second link 220 is rotatably coupled to the third link 230 through a shaft. For example, the other side of the second link 220 may be formed in a disk shape, and the shaft may be coupled therethrough. In addition, both longitudinal end portions of the shaft may be coupled to the third link 230. With such a configuration, the shaft may serve as an axis about which the second link 220 and/or the third link 230 are rotated. Accordingly, the second link 220 and the third link 230 may be connected to be relatively rotatable.

The third link 230 is link-coupled to the first link 210 and the second link 220, and is coupled to the wheel unit 300.

The third link 230 is formed in a frame shape, wherein one side in a longitudinal direction is coupled to the first link 210 and the second link 220, and the other side in the longitudinal direction is coupled to the wheel unit 300.

One side in the longitudinal direction of the third link 230 is link-coupled to the first link 210 and the second link 220. For example, a space may be formed at one side of the third link 230 so as to accommodate the first link 210 and the second link 220. That is, the one side of the third link 230 may be formed in a shape of a pair of parallel frames, and the first link 210 and the second link 220 may be accommodated in a space between the pair of parallel frames.

Here, two shafts may be disposed side by side between the pair of frames. That is, both end portions of each of the two shafts may be coupled to the pair of frames. Also, each of the shafts may pass through the first link 210 and the second link 220. At this time, the first link 210 may be disposed at a front lower side of the second link 220. That is, the shaft passing through the first link 210 may be disposed closer to the wheel 310 than the shaft passing through the second link 220.

Accordingly, the first link 210 and the second link 220 may be coupled to be relatively rotatable with respect to the third link 230, respectively.

The other side in the longitudinal direction of the third link 230 is coupled to the wheel unit 300. The other side in the longitudinal direction of the third link 230 may be formed to cover at least a portion of the wheel 310. For example, the other side in the longitudinal direction of the third link 230 may be formed to cover a rotation center of the wheel 310, and a space for rotatably accommodating the wheel 310 may be formed therein.

In addition, a wheel motor MW may be accommodated inside the other side in the longitudinal direction of the third link 230.

With such a configuration, the wheel 310 and the wheel motor MW can be accommodated at the other side in the longitudinal direction of the third link 230, and the wheel 310 can be rotatably coupled thereto.

Meanwhile, a sensor capable of measuring a distance to the ground may be provided at the other side in the longitudinal direction of the third link 230. For example, the sensor may be a Time of Flight (ToF) sensor. With such a configuration, the control unit 700 can determine whether the wheel 310 is in contact with the ground.

Meanwhile, the leg unit 200 may be provided with a stopper 240. The stopper 240 may be disposed inside the body housing 110. The stopper 240 may be disposed adjacent to a rotation coupling portion 410 of the arm 400. For example, the stopper 240 may be disposed inside an inner circumferential surface of the rotation coupling portion 410 formed in a cylindrical shape.

As an example, the stopper 240 may be disposed on a leg support portion (not shown). As another example, the stopper 240 may be disposed on the first link 210.

The stopper 240 may be formed in a shape protruding toward the rotation coupling portion 410. For example, the stopper 240 may have a predetermined thickness and may be formed to protrude in an arch shape disposed on a concentric circle. At this time, an outer circumferential surface of the stopper 240 may be disposed toward a front upper portion of the robot 1, and an inner circumferential surface of the stopper 240 may be disposed toward a rear lower side of the stopper.

The stopper 240 may be in contact with and supported by a rotation protrusion 480 of the arm 400, which will be described later. For example, the rotation protrusion 480 protruding from the inner circumferential surface of the rotation coupling portion 410 rotates together with the rotation of the arm 400, and when the arm 400 rotates to a predetermined position, it may come into contact with the rotation protrusion 480.

With such a configuration, the stopper 240 can limit a rotation angle of the arm 400 when the arm 400 rotates.

Looking at the overall balance provided by the leg unit 200, the first link 210 and the second link 220 are rotatably coupled to a link frame (not shown) provided inside the robot body 100, and the first link 210 and the second link 220 are link-coupled to the third link 230. That is, the robot 1 has a structure that supports the robot body 100 through a four-bar linkage consisting of the link frame (not shown), the first link 210, the second link 220, and the third link 230.

In the leg unit 200, the gravity compensation unit generates a restoring force in a direction of lifting the robot body 100. Accordingly, even in a state where the suspension motor MS is not driven, the pair of leg units 200 can maintain a state in which the robot body 100 is lifted by a predetermined height from the ground.

Meanwhile, in the robot 1 according to an embodiment of the present invention, when one of the pair of wheels 310 is lifted to cross an obstacle, or when the height of the robot body 100 is lowered for charging or the like, balance can be maintained by driving the suspension motor MS.

When the suspension motor MS is driven, the first link 210 rotates about one end portion adjacent to the suspension motor MS as an axis, and the other end portion moves upward. Then, the third link 230 connected to the other end portion of the first link 210 is moved according to the rotation of the first link 210. Further, the second link 220 is pushed by the third link 230 to perform a rotational movement. As a result, one end portion (a coupling point with the first link 210) of the third link 230 moves backward, and the other end portion of the third link 230 can move upward.

With such a configuration, even if the wheel 310 is moved in the vertical direction, the movement range of the wheel 310 in the front-rear direction can be limited. Accordingly, the robot 1 can stably maintain balance.

Therefore, according to the robot 1 of the present invention, there is an effect of being able to cross obstacles of various heights using the four-bar linkage structure.

### Wheel Unit

A wheel unit 300 in the robot 1 according to an embodiment of the present invention will be described with reference to FIGS. 1 to 8.

The wheel unit 300 is rotatably coupled to the leg unit 200 and is capable of moving the robot body 100 and the leg unit 200 by rolling on the ground.

The wheel unit 300 includes a wheel 310 that performs rolling travel on the ground while in contact with the ground.

The wheel 310 is provided to have a predetermined radius and a predetermined width along an axial direction. When the robot 1 is viewed from the front, at least a portion of the robot body 100 and the leg unit 200 may be disposed vertically above the wheel 310.

Although not shown, the wheel 310 may include a wheel frame formed in a circular shape. The wheel frame may be formed in a cylindrical shape in which one side facing a shaft of a wheel motor MW is open. Through this, the weight of the wheel frame can be reduced.

However, when the wheel frame is formed in a cylindrical shape, the overall rigidity of the wheel frame may be reduced. Considering this, ribs (not shown) for reinforcing rigidity may be formed on the inner and outer surfaces of the wheel frame, respectively.

A tire is coupled to an outer circumferential surface of the wheel frame. The tire may be formed in an annular shape having a diameter that allows it to be fitted onto the outer circumferential surface of the wheel frame.

Grooves of a predetermined pattern may be recessed into an outer circumferential surface of the tire so as to improve the traction of the tire.

In one embodiment, the tire may be formed of a rubber material having elasticity.

The wheel motor MW may provide driving force to the wheel 310. The wheel motor MW may generate rotational force by receiving power from the battery 800.

The wheel motor MW may be accommodated inside the other side of the third link 230. In addition, the shaft of the wheel motor MW may be coupled to the wheel 310. That is, the wheel motor MW may be an in-wheel motor.

With such a configuration, when the wheel motor MW is driven, the wheel 310 can roll along the ground while rotating, and the robot 1 can move along the ground.

### Arm

An arm 400 in the robot 1 according to an embodiment of the present invention will be described with reference to FIGS. 1 to 8.

The arm 400 may be pivotally coupled to both side surfaces of the robot body 100. For example, the arm 400 may refer to a rotating body that is coupled to both longitudinal end portions of the ellipsoidal robot body 100 and rotates about the both longitudinal end portions of the robot body 100 as a single rotation axis.

Specifically, the arm 400 includes a rotation coupling portion 410, a connection portion 420, a detachable portion 430, and a connection terminal 440.

The rotation coupling portion 410 may be rotatably coupled to both side surfaces of the robot body 100. A pair of rotation coupling portions 410 may be provided and coupled to both left and right sides of the robot body 100 so as to be relatively rotatable. At this time, the pair of rotation coupling portions 410 may rotate in conjunction with each other. That is, the pair of rotation coupling portions 410 may rotate simultaneously with each other, and the magnitude of the rotation angle may also be the same. However, when viewed based on the robot body 100, the rotation directions of the pair of rotation coupling portions 410 may be opposite to each other. That is, when viewed based on the robot body 100, if the rotation coupling portion 410 on one side rotates in a clockwise direction, the rotation coupling portion 410 on the other side may rotate in a counter-clockwise direction.

The rotation coupling portion 410 may be formed in a shape capable of covering both left and right end portions of the robot body 100. For example, the rotation coupling portion 410 may be formed in a cylindrical shape having a predetermined thickness. At this time, both left and right end portions of the robot body 100 may be disposed to face a rotation center of the rotation coupling portion 410.

That is, describing the state in which the rotation coupling portion 410 is coupled to the robot body 100, assuming that the robot body 100 is a human face, the rotation coupling portion 410 may have a shape similar to a pair of earmuffs or earpieces of headphones.

As shown in FIG. 4, in the robot 1 according to an embodiment, an arm motor MA may be disposed inside the body housing 110. Alternatively, according to an embodiment, it is also possible for the arm motor MA to be disposed inside the rotation coupling portion 410.

The arm motor MA is connected to the arm 400 to provide driving force to the arm 400. More specifically, a shaft of the arm motor MA or a final output end of a gear is connected to the rotation coupling portion 410. For example, as shown in FIG. 4, the shaft of the arm motor MA may be connected to a reduction gear 460, and the reduction gear 460 may be connected to a driven gear 470.

The reduction gear 460 consists of at least one or more gears and transmits rotational force applied from the arm motor MA to the driven gear 470, while reducing a rotational speed of the driven gear 470 through a gear ratio. Through this, precise rotation of the arm 400 can be controlled, and the arm 400 can be configured to provide a relatively large force.

The driven gear 470 may be coupled to the rotation coupling portion 410 to be integrally rotated therewith. The driven gear 470 may be meshed with an output end of the reduction gear 460 to receive rotational power from the arm motor MA.

With such a configuration, when the arm motor MA is operated, the rotation coupling portion 410 can be rotated.

Two arm motors MA may be provided and respectively connected to the pair of rotation coupling portions 410. As another example, one arm motor MA may be provided and connected to any one of the rotation coupling portions 410.

With such a configuration, when the arm motor MA is operated, the pair of rotation coupling portions 410 rotate together in conjunction with each other, and the connection portion 420 rotates together according to the rotation of the rotation coupling portion 410. That is, according to the present invention, the rotation coupling portion 410 and the connection portion 420 of the arm 400 can be integrally rotated about an arm shaft of the rotation coupling portion 410 as a rotation axis.

Meanwhile, a speaker 450 may be disposed outside the rotation coupling portion 410. That is, the speaker 450 may be disposed on each of the pair of rotation coupling portions 410 in a direction opposite to the direction in which the robot body 100 is disposed. Accordingly, the speakers 450 may be respectively disposed at positions covering both left and right sides of the body housing 110.

The speaker 450 can output information of the robot 1 as sound. A source of the sound output by the speaker 450 may be sound data pre-stored in the robot 1. For example, the pre-stored sound data may be voice data of the robot 1. For example, the pre-stored sound data may be a notification sound guiding the status of the robot 1. Meanwhile, the source of the sound output by the speaker 450 may be sound data received through a communication unit 710.

Meanwhile, in the case of a conventional robot, a pair of arms is provided on both sides of a body, similar to human arms, to move objects or perform specific tasks.

However, when a pair of arms is provided as described above, each arm may move independently, and accordingly, loads applied to both sides of the robot may vary. Therefore, a problem may occur in which the robot tilts to one side and falls.

In addition, when the robot has fallen, an operation of the arms supporting themselves against the ground to stand up may be attempted. However, since the arms on both sides rotate independently to support themselves against the ground, there is a limitation in that balance may be lost during the process of the robot standing up, causing it to fall again.

On the other hand, in the case of a robot that carries objects or performs specific tasks through a single arm, there is a limitation in that the load of the objects being carried or the impact that may occur during task performance is concentrated only on the single arm, which may cause damage to the arm.

To solve this, the robot 1 according to an embodiment of the present invention is configured in a form in which a single arm 400 is rotatably coupled to both sides of the robot body 100.

The connection portion 420 may connect the pair of rotation coupling portions 410 to each other. The connection portion 420 may connect the pair of rotation coupling portions 410 covering both left and right sides of the robot body 100 so that they rotate together.

The connection portion 420 connects the pair of rotation coupling portions 410 to each other and may be formed in a shape rotatable about the robot body 100. Specifically, the connection portion 420 may be formed in a frame shape in which both longitudinal end portions are bent and extended. At this time, both end portions of the connection portion 420, which are bent and extended, may be disposed parallel to each other and connected to the pair of rotation coupling portions 410. As an example, the connection portion 420 may be formed in an '∩' shape. As another example, the connection portion 420 may also be formed in an arch shape.

Describing a state in which the arm 400 is coupled to the robot body 100, assuming that the robot body 100 is a human face, the connection portion 420 may have a shape similar to a headband of headphones. That is, assuming that the robot body 100 is a human face, the arm 400 may appear in a shape similar to headphones.

The connection portion 420 may be integrally formed with the pair of rotation coupling portions 410. That is, the pair of rotation coupling portions 410 respectively disposed on the left and right sides of the robot body 100 and the connection portion 420 may constitute the arm 400 having an integral structure.

With such a configuration, the pair of rotation coupling portions 410 are integrally connected to the connection portion 420, so that the entire arm 400 can rotate together about the rotation coupling portion 410 as a rotation center.

Meanwhile, a rotation radius of the arm 400 may be longer than a maximum length of the first link 210 and shorter than a maximum length of the leg unit 200. Specifically, a shortest distance from the rotation center of the rotation coupling portion 410 to an outer end portion of the connection portion 420 may be longer than the maximum length of the first link 210 and shorter than the maximum length of the leg unit 200.

With such a configuration, when the arm 400 is rotated, at least a portion of the arm 400 can be disposed closer to the ground than the first link 210 is.

Meanwhile, the arm 400 further includes a rotation protrusion 480 protruding from an inner circumferential surface of the rotation coupling portion 410.

The rotation protrusion 480 is formed to protrude from the inner circumferential surface of the rotation coupling portion 410, and may be formed in a shape in which a circumferential width narrows from the inner circumferential surface of the rotation coupling portion 410 toward the rotation center of the rotation coupling portion 410 (refer to FIG. 4).

The rotation protrusion 480 may rotate together with the rotation coupling portion 410 and the connection portion 420. That is, when the rotation coupling portion 410 and the connection portion 420 rotate, the rotation protrusion 480 rotates by the same rotation angle as the rotation coupling portion 410 and the connection portion 420.

The rotation protrusion 480 may be supported in contact with the stopper 240 according to the rotation of the arm 400. For example, when the connection portion 420 passes the rear of the robot body 100 and rotates to be closer to the ground than the first link 210 is, the rotation protrusion 480 may come into contact with the stopper 240.

With such a configuration, when the arm 400 rotates to a predetermined position, the stopper 240 and the rotation protrusion 480 are supported in contact with each other, thereby limiting the rotation of the arm 400.

Furthermore, there is an effect in which the postures of the arm 400 and the leg unit 200 can be maintained while the stopper 240 and the rotation protrusion 480 remain in a state of supporting each other.

Meanwhile, FIGS. 6 and 7 are views for explaining another embodiment of an arm in the robot according to the present invention.

An arm 1400 according to another embodiment of the present invention will be described with reference to FIGS. 6 and 7.

To avoid repetitive description, since the structure and effects of the arm 1400 are the same as those of the arm 400 according to the first embodiment of the present invention, except for content specifically described in this embodiment, the description thereof may be incorporated by reference.

The arm 1400 of the present embodiment further includes a terminal rotation portion 1460 and a switching motor MC that provides rotational force to the terminal rotation portion 1460.

The terminal rotation portion 1460 is rotatably coupled to a connection portion 1420. As an example, the terminal rotation portion 1460 is formed in a plate shape having a predetermined thickness, and a detachable portion 1430 and a connection terminal 1440 may be disposed on one surface thereof.

The terminal rotation portion 1460 may form the exterior of the arm 1400 together with the connection portion 1420. Rotation shafts coupled to the connection portion 1420 may be provided at both longitudinal end portions of the terminal rotation portion 1460.

The switching motor MC is connected to the terminal rotation portion 1460 to provide rotational force to the terminal rotation portion 1460. More specifically, a shaft of the switching motor MC or a final output end of a gear is connected to the terminal rotation portion 1460.

With such a configuration, when the switching motor MC is operated, the terminal rotation portion 1460 is rotated.

When the terminal rotation portion 1460 rotates, a surface exposed to the outside can be changed. Specifically, one surface of the terminal rotation portion 1460 on which the detachable portion 1430 and the connection terminal 1440 are disposed may be exposed to the outside. Then, when the terminal rotation portion 1460 rotates, the detachable portion 1430 and the connection terminal 1440 may be hidden within an internal space of the connection portion 1420.

With such a configuration, when coupling between the arm 1400 and a functional module is unnecessary, the detachable portion 1430 and the connection terminal 1440 can be hidden inside the connection portion 1420.

In particular, when the robot 1 falls or the like, it is necessary to rotate the arm 1400 so that the connection portion 1420 supports itself against the ground. At this time, a case may occur in which the detachable portion 1430 and the connection terminal 1440 are contaminated or damaged while coming into contact with the ground.

Therefore, according to the arm 1400 of the present embodiment, it is possible to prevent the detachable portion 1430 and the connection terminal 1440 from being exposed to the outside through the rotation of the terminal rotation portion 1460. In addition, contamination or damage of the detachable portion 1430 and the connection terminal 1440 can be prevented.

### Robot Mask

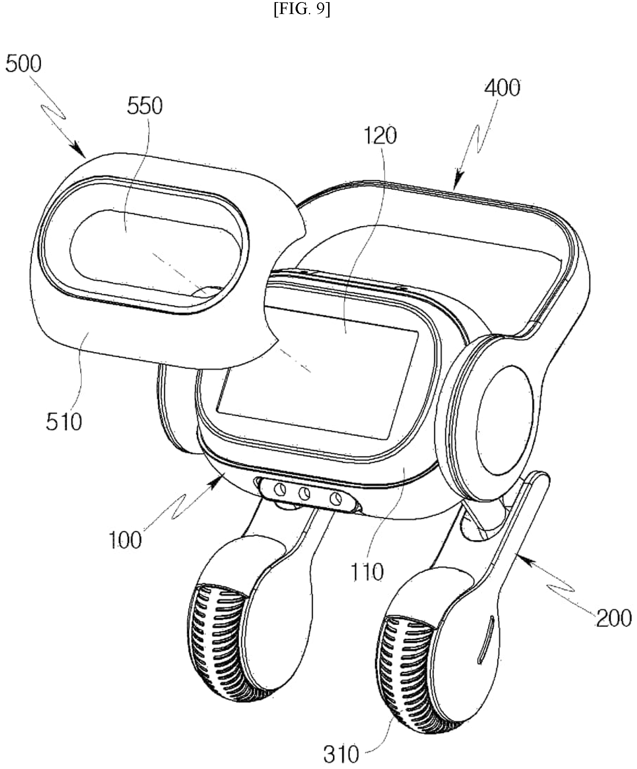

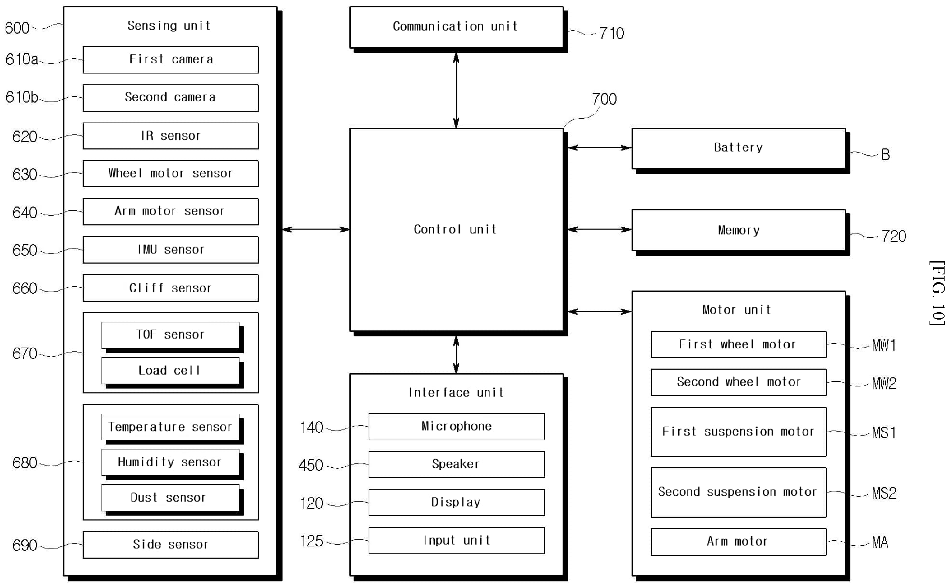

FIG. 10 is a view for explaining a coupling relationship between a robot mask 500 and a robot body 100 in a robot according to an embodiment of the present invention. (Note: Reference to FIG. 9 in the source text is corrected to FIG. 10 based on the previous drawing descriptions).

The robot 1 according to an embodiment of the present invention may further include a robot mask unit 500.

The robot mask unit 500 is detachably coupled to the robot body 100 and is capable of covering the display 120. The robot mask unit 500 is coupled to the robot body 100 to form an exterior of the robot 1.

Meanwhile, the robot mask unit 500 according to an embodiment of the present invention may include a window 550 that exposes an image displayed on the display 120 to the outside when coupled to the robot body 100.

The window 550 may be disposed on a mask body portion 510. Specifically, the window 550 is disposed through the mask body portion 510 and may be disposed at a position facing the display 120 when the robot mask unit 500 is coupled to the robot body 100.

The window 550 may be formed of a material through which light can pass. For example, the window 550 may be formed of a transparent material.

Meanwhile, when the robot mask unit 500 is coupled to the robot body 100, a face and facial expressions may be displayed on the display 120.

The robot 1 may display facial features such as eyes, a nose, and a mouth on the display 120 to make a user feel as if the robot is expressing emotions.

In this manner, the robot 1 can provide a pet robot service that displays emotions to the user and interacts with the user, which has an effect of providing emotional stability to the user.

As described above, the robot 1 may express emotions visually by showing facial expressions on the display 120 and may also express emotions through voice output from the speaker 450.

For example, sounds such as laughing or surprised sounds may be output in correspondence with the facial expressions displayed on the display 120.

In addition, as described above, the robot 1 may express emotions visually by showing facial expressions on the display 120 and may also express emotions through rotation of the arm 400.

For example, the robot 1 may express emotions by shaking the arm 400 while displaying a smiling facial expression on the display 120.

### Control Configuration

FIG. 9 is a block diagram for explaining a control configuration of a robot according to an embodiment of the present invention. (Note: Reference to FIG. 10 in the source text is corrected to FIG. 9 based on the previous drawing descriptions).

Referring to FIG. 9, the robot 1 according to an embodiment of the present invention may include a sensing unit 600, a control unit 700, a communication unit 710, a memory 720, a battery 800, a motor unit, and an interface unit.

The components shown in the block diagram of FIG. 9 are not essential in implementing the robot 1, and thus the robot 1 described in the present specification may have more or fewer components than the components listed above.

First, the control unit 700 may control the overall operation of the robot 1. The control unit 700 may control the robot 1 to perform various functions according to setting information stored in the memory 720, which will be described later.

The control unit 700 may be disposed on the robot body 100. More specifically, the control unit 700 may be mounted and provided on a Printed Circuit Board (PCB) disposed inside the body housing 110.

The control unit 700 may include all types of devices capable of processing data, such as a processor. Here, the "processor" may refer to a data processing device embedded in hardware having a physically structured circuit to perform functions expressed by codes or instructions included in, for example, a program. As an example of such a data processing device embedded in hardware, it may encompass processing devices such as a microprocessor, a Central Processing Unit (CPU), a processor core, a multiprocessor, an Application-Specific Integrated Circuit (ASIC), and a Field Programmable Gate Array (FPGA), but the scope of the present invention is not limited thereto.

The control unit 700 may receive information about an external environment of the robot 1 from at least one of the components of the sensing unit 600, which will be described later. In this case, the information about the external environment may be, for example, information such as temperature, humidity, and the amount of dust in a room where the robot 1 travels. Alternatively, for example, it may be cliff information. Alternatively, for example, it may be indoor map information. Of course, the information about the external environment is not limited to the above-described examples.

The control unit 700 may receive information about a current state of the robot 1 from at least one of the components of the sensing unit 600, which will be described later. In this case, the current state may be, for example, tilt information of the robot body 100. Alternatively, for example, it may be information about a separation state between the wheel 310 and the ground. Alternatively, for example, it may be position information of the wheel motor MW. Alternatively, for example, it may be position information of the suspension motor MS. Of course, the information about the current state of the robot 1 is not limited to the above-described examples.

The control unit 700 may transmit a driving control command to at least one of the components of the motor unit, which will be described later. The control unit 700 may control rotation of one or more of the wheel motor MW, the suspension motor MS, and the arm motor MA in order to implement any one operation among travel, posture maintenance, and posture transition of the robot 1.

The control unit 700 may receive a user's command through at least one of the components of the interface unit, which will be described later. For example, the command may be a command for turning the robot 1 on/off. Alternatively, for example, the command may be a command for manually controlling various functions of the robot 1.

The control unit 700 may output information related to the robot 1 through at least one of the components of the interface unit, which will be described later. For example, the output information may be visual information. Alternatively, for example, the output information may be auditory information.

The motor unit includes at least one motor and may provide driving force to components connected to each motor.

The motor unit may include a wheel motor MW that provides driving force to left and right wheels 310. More specifically, the motor unit may include a first wheel motor MW1 that transmits driving force to a wheel 310 disposed on one side in the left-right direction, and a second wheel motor MW2 that transmits driving force to a wheel 310 disposed on the other side in the left-right direction.

The wheel motors MW may be respectively disposed in the wheel units 300. More specifically, the wheel motor MW may be accommodated inside the third link 230.

The wheel motor MW is connected to the wheel 310. More specifically, a shaft of the first wheel motor MW1 or a final output end of a gear is connected to the wheel 310 disposed on one side in the left-right direction. A shaft of the second wheel motor MW2 or a final output end of a gear is connected to the wheel 310 disposed on the other side in the left-right direction. Each of the left and right wheel motors MW is driven and rotated according to a control command from the control unit 700, and the robot 1 travels along the ground by the rotation of the wheels 310 according to the rotation of the wheel motors MW.

The motor unit may include a suspension motor MS that provides driving force to the left and right leg units 200. More specifically, the motor unit may include a first suspension motor MS1 that transmits driving force to a leg unit 200 disposed on one side in the left-right direction, and a second suspension motor MS2 that transmits driving force to a leg unit 200 disposed on the other side in the left-right direction.

The suspension motor MS may be disposed in the robot body 100. More specifically, each suspension motor MS may be accommodated inside the body housing 110.

The suspension motor MS is connected to the first link 210. More specifically, a shaft of the first suspension motor MS1 or a final output end of a gear is connected to the first link 210 disposed on one side in the left-right direction. A shaft of the second suspension motor MS2 or a final output end of a gear is connected to the first link 210 disposed on the other side in the left-right direction. Each of the left and right suspension motors MS is driven and rotated according to a control command from the control unit 700. As the suspension motor MS rotates, the first link 210 rotates, and the third link 230 connected to the first link 210 also rotates. As a result, an angle between the first link 210 and the third link 230 can be changed.

Through this, the robot 1 is capable of performing an operation of lifting or lowering the wheel 310, and can maintain a horizontal posture when climbing an obstacle or traveling on uneven ground. Alternatively, an operation in which the robot body 100 moves downward or upward becomes possible.

The motor unit may include an arm motor MA that provides rotational force to the arm 400.

The arm motor MA may be disposed in the robot body 100. More specifically, at least one arm motor MA may be accommodated inside the body housing 110.

The arm motor MA is driven and rotated according to a control command from the control unit 700. As the arm motor MA rotates, the rotation coupling portion 410 rotates, and the connection portion 420 formed integrally with the rotation coupling portion 410 also rotates. As a result, the arm 400 can be pivoted with respect to the robot body 100.

Through this, the robot 1 is capable of performing an operation of rotating the arm 400, and the arm 400 can be rotated to be coupled with a functional module. Alternatively, the arm 400 can be made to support itself against the ground through the rotation of the arm 400.

The sensing unit 600 includes at least one sensor, and each sensor can measure or detect information about an external environment of the robot 1 and/or information about a current state of the robot 1.

The sensing unit 600 may include a first camera 610a.

The first camera 610a is provided to map an interior where the robot 1 travels. The first camera 610a may be referred to as a mapping camera 610a.

For this purpose, the first camera 610a may be disposed at the front of the robot body 100. More specifically, the first camera 610a may be disposed at the front portion of the body housing 110.

The first camera 610a may capture images of the interior during travel to perform Simultaneous Localization and Mapping (SLAM). The control unit 700 may implement SLAM based on information about the surrounding environment captured by the first camera 610a and information about a current position of the robot 1.

Meanwhile, the method by which the robot 1 according to an embodiment of the present invention implements SLAM may be a method implemented using only the first camera 610a, but is not limited thereto. For example, the robot 1 may implement SLAM by further utilizing an additionally provided sensor. The additional sensor may be, for example, a Laser Distance Sensor (LDS).

The sensing unit 600 may include a second camera 610b.

The second camera 610b is a component provided to recognize a position, distance, height, etc., of an object (item, human body, etc.) existing in front of a traveling direction. The second camera 610b may be referred to as a depth camera 610b.

The second camera 610b may be disposed at the front of the robot body 100 so as to detect an object existing in front when the robot 1 travels forward. The second camera 610b may be additionally disposed at the rear of the robot body 100 so as to detect an object existing in the rear when the robot 1 travels backward.

The second camera 610b may recognize a position of an object by capturing an image of the front of the direction in which the robot 1 travels (the front when moving forward, and the rear when moving backward). For this purpose, the second camera 610b may include a depth module and an RGB module, respectively.

The depth module can obtain depth information of an image. For example, the depth information may be obtained by measuring a delay or phase shift of a modulated optical signal for every pixel of a captured image to obtain time-of-flight information.

The RGB module can obtain a color image (image video). Edge characteristics, color distribution, frequency characteristics (or wavelet transform), etc., can be extracted from the color image.

As such, distance and/or height information regarding an object to be recognized is obtained through the depth information in the front image captured by the second camera 610b, and by calculating this together with the edge characteristics extracted from the color image, whether an object exists in front and/or the position thereof can be recognized.

The sensing unit 600 may include an IR sensor 620 for infrared detection.

The IR sensor 620 may be an IR camera that detects infrared light.

The IR sensor 620 may be disposed on the robot body 100. More specifically, the IR sensor 620 may be disposed at a front portion of the body housing 110. The IR sensor 620 may be disposed side by side with the first camera 610a in the left-right direction.

The IR sensor 620 can approach a specific module by detecting infrared light emitted by an IR LED provided in the module. For example, the module may be a charging station for charging the robot 1. For example, the module may be a functional module detachably provided on the arm 400.

When a state of charge of the robot 1 is less than or equal to a preset level, the control unit 700 may control the IR sensor 620 to start detecting the IR LED. When a command to find a specific module is received from a user, the control unit 700 may control the IR sensor 620 to start detecting the IR LED.

The sensing unit 600 may include a wheel motor sensor 630.

The wheel motor sensor 630 can measure a position of the wheel motor MW. For example, the wheel motor sensor 630 may be an encoder. As is well known, an encoder can detect a position of a motor and can also detect a rotational speed of the motor.

The wheel motor sensors 630 may be respectively disposed on the left and right wheel motors MW. More specifically, the wheel motor sensor 630 is connected to a shaft of the wheel motor MW or a final output end of a gear, and may be accommodated inside the third link 230 together with the wheel motor MW.

The sensing unit 600 may include an arm motor sensor 640.

The arm motor sensor 640 can measure a position of the arm motor MA. For example, the arm motor sensor 640 may be an encoder. As is well known, an encoder can detect a position of a motor and can also detect a rotational speed of the motor.

The arm motor sensor 640 may be disposed on the arm motor MA. More specifically, the arm motor sensor 640 is connected to a shaft of the arm motor MA or a final output end of a gear, and may be accommodated inside the body housing 110 or the rotation coupling portion 410 together with the arm motor MA.

The sensing unit 600 may include an IMU sensor 650.

The IMU sensor 650 can measure a tilt angle of the robot body 100.

As is well known, an Inertial Measurement Unit (IMU) sensor 650 is a sensor incorporating a 3-axis acceleration sensor, a 3-axis gyro sensor, and a terrestrial magnetism sensor, and is also referred to as an inertial measurement sensor.

The 3-axis acceleration sensor is a sensor that detects gravitational acceleration of an object in a stationary state. Since the gravitational acceleration varies according to an angle at which an object is tilted, a tilt angle is obtained by measuring the gravitational acceleration. However, there is a disadvantage in that a correct value cannot be obtained in a moving acceleration state rather than a stationary state.

The 3-axis gyro sensor is a sensor that measures angular velocity. A tilt angle is obtained by integrating the angular velocity over the total time. However, the angular velocity measured by the gyro sensor suffers from continuous errors due to reasons such as noise, and due to these errors, an offset in the integrated value accumulates and occurs over time.

As a result, when a long period of time passes in a stationary standby state, the tilt of the robot 1 can be accurately measured by the acceleration sensor, but an error occurs by the gyro sensor. In the case of traveling, a precise tilt value of the robot 1 can be measured by the gyro sensor, but a correct value cannot be obtained by the acceleration sensor.

The use of the IMU sensor 650 can compensate for the aforementioned disadvantages of the acceleration sensor and the gyro sensor.

Hereinafter, this specification describes an embodiment in which the IMU sensor 650 is provided.

The IMU sensor 650 may be disposed on the robot body 100. More specifically, the IMU sensor 650 may be disposed adjacent to the control unit 700. The IMU sensor 650 may be mounted and provided on a PCB inside the robot body 100. To improve the measurement accuracy of the tilt angle and direction, it is preferable that the IMU sensor 650 is disposed close to a central area portion of the robot body 100.

The IMU sensor 650 may measure at least one of 3-axis acceleration, 3-axis angular velocity, and 3-axis terrestrial magnetism data of the robot body 100 and transmit the measured data to the control unit 700.

The control unit 700 may calculate a tilted direction and a tilted angle of the robot body 100 using at least one of the acceleration, angular velocity, and terrestrial magnetism data received from the IMU sensor 650. Based on this, the control unit 700 may perform horizontal posture maintenance control of the robot body 100, which will be described later.

The sensing unit 600 may include a cliff sensor 660 for detecting a cliff.

The cliff sensor 660 may be configured to detect a distance from the front and/or rear ground on which the robot 1 travels. The cliff sensor 660 may be implemented in various ways within a range capable of detecting a relative distance between a point where the cliff sensor 660 is formed and the ground.

For example, the cliff sensor 660 may include a light-emitting portion that irradiates light and a light-receiving portion into which reflected light is incident. The cliff sensor 660 may be formed of an infrared sensor.

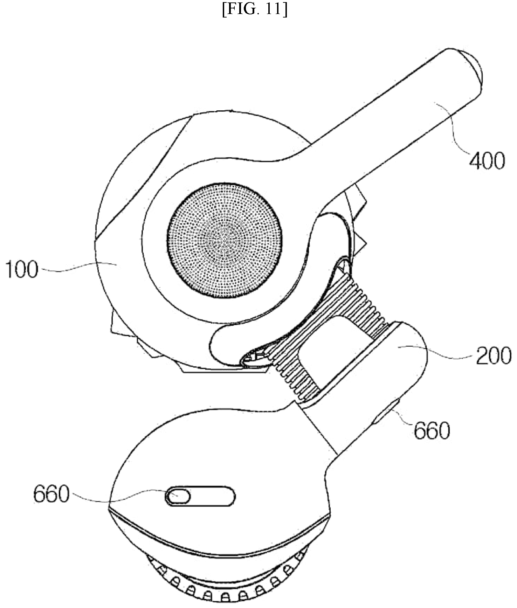

The cliff sensor 660 may be disposed on the robot body 100. More specifically, the cliff sensor 660 may be disposed inside the robot body 100. Alternatively or additionally, the cliff sensor 660 may be disposed on each of the left and right leg units 200. Alternatively or additionally, the cliff sensor 660 may be disposed on each of the left and right wheel units 300 (refer to FIG. 11).

The cliff sensor 660 can irradiate light toward a front and/or rear floor surface of the robot 1. The cliff sensor 660 enables preliminary detection of whether a cliff exists in front of a traveling direction of the robot 1.

A light-emitting portion of the cliff sensor 660 can irradiate light obliquely toward the front and/or rear floor surface. A light-receiving portion of the cliff sensor 660 can receive light that is reflected from the floor surface and incident thereon. A distance between the front ground and the cliff sensor 660 can be measured based on a difference between a light irradiation timing and a light reception timing.

When the distance measured by the cliff sensor 660 exceeds a preset predetermined value or exceeds a predetermined range, it may be a case where the front ground suddenly becomes lower. Based on this principle, a cliff can be detected.

When a cliff is detected in the front and/or rear, the control unit 700 can control the wheel motor MW so that the robot 1 travels while avoiding the detected cliff. At this time, the control of the wheel motor MW may be a stop control. Alternatively, the control of the wheel motor MW may be a rotation direction switching control.

The sensing unit 600 may include a contact detection sensor 670.

The contact detection sensor 670 can detect whether the wheel 310 is in contact with the ground.

The contact detection sensor 670 may include a TOF sensor that measures a separation distance between the wheel 310 of the robot 1 and the ground. The TOF sensor may be a 3D camera to which Time of Flight (TOF) technology is applied. As is well known, TOF technology is a technology that measures a distance to an object based on a round-trip flight time of light that is irradiated toward the object and reflected back.

The TOF sensor may be disposed in the wheel unit 300. For example, the contact detection sensors 670 may be respectively disposed on the left and right third links 230. Whether the wheel 310 is in a state of being in contact with the ground can be determined through the distance to the ground measured by the TOF sensor. If the distance measured by the TOF sensor is less than a preset distance (or less than a lower limit of a preset distance range), the wheel 310 is in the state of being in contact with the ground. If the distance measured by the TOF sensor is greater than or equal to a preset distance (or greater than or equal to an upper limit of a preset distance range), the wheel 310 is in a state of being separated from the ground.

The contact detection sensor 670 may include a load cell that measures a magnitude of force applied to some components of the robot 1.

As is well known, when force is applied to a load cell, a resistance value of a strain gauge provided on a surface thereof changes. At this time, a magnitude of the force applied to the load cell can be measured through the change in the resistance value.

The load cell may be disposed on the leg unit 200. Preferably, the load cells may be respectively disposed on the left and right third links 230. In a state where the wheel 310 is in contact with the ground, the third link 230 is deformed by a normal force applied from the ground. A measured value of the load cell appears as a value different from an initial value according to the deformation of the third link 230. Through this, it can be determined whether the wheel 310 is in a state of being in contact with the ground.

The sensing unit 600 may include an environmental sensor 680.

The environmental sensor 680 may be configured to measure various environmental states of the outside of the robot 1, that is, the inside of a house where the robot 1 travels. The environmental sensor 680 may include at least one of a temperature sensor, a humidity sensor, and a dust sensor.

The environmental sensor 680 may be disposed on the robot body 100. More specifically, the environmental sensor 680 may be disposed at a rear portion of the robot body 100. As a possible embodiment, information measured by the environmental sensor 680 may be visually displayed on the display 120.

The sensing unit 600 may include a side sensor 690.

The side sensor 690 can measure a distance to an obstacle including a wall surface or the like.

The side sensor 690 may be configured to detect a distance to a side wall surface along which the robot 1 travels. The side sensor 690 may be implemented in various ways within a range capable of detecting a relative distance between a point where the side sensor 690 is disposed and an obstacle.

For example, the side sensor 690 may include a light-emitting portion that irradiates light and a light-receiving portion into which reflected light is incident. The side sensor 690 may be formed of an infrared sensor.

The side sensors 690 may be disposed on both side surfaces of the robot 1. For example, the side sensor 690 may be disposed on an outer surface of the third link 230 of the leg unit 200.

The interface unit includes at least one component for interaction between a user and the robot 1, and each component may be provided to input a command from the user and/or output information to the user.

The interface unit may include a microphone 140.

The microphone 140 is a component that recognizes a user's voice and a plurality thereof may be provided. A plurality of microphones 140 may be disposed on the body housing 110. For example, four microphones 140 may be disposed on an upper portion of the body housing 110.

Voice signals received by the microphones 140 can be used for user position tracking. In this case, a known sound source tracking algorithm can be applied. For example, the sound source tracking algorithm may be a three-point measurement method (triangulation method) using a time difference in which the plurality of microphones 140 receive a voice signal. The principle is that the position of the sound source is calculated using the position of each microphone 140 and the speed of sound waves.

Meanwhile, if the microphone 140 and the aforementioned first camera 610a cooperate with each other, the robot 1 can be implemented to find the user's position even when the user calls the robot 1 from a distance.

The interface unit may include a speaker 450.

The speaker 450 may be disposed on the arm 400. For example, the speaker 450 may be disposed on the rotation coupling portion 410 of the arm 400. The speakers 450 may be respectively disposed at positions covering both left and right sides of the body housing 110.

The speaker 450 can output information of the robot 1 as sound. A source of the sound output by the speaker 450 may be sound data pre-stored in the robot 1. For example, the pre-stored sound data may be voice data of the robot 1. For example, the pre-stored sound data may be a notification sound guiding the status of the robot 1. Meanwhile, the source of the sound output by the speaker 450 may be sound data received through a communication unit 710.

The interface unit may include a display 120 and an input unit 125.

The display 120 may include a display disposed in one or more modules. The display 120 may be disposed at a front upper portion of the robot body 100.

The display 120 may be formed of any one of a Light Emitting Diode (LED), a Liquid Crystal Display (LCD), a Plasma Display Panel (PDP), and an Organic Light Emitting Diode (OLED).

Information such as operating time information of the robot 1 and power information of the battery 800 may be displayed on the display 120.

A facial expression of the robot 1 may be displayed on the display 120. Alternatively, eyes of the robot 1 may be displayed on the display 120. Through the shape of the face or the shape of the eyes displayed on the display 120, the current state of the robot 1 may be personified and expressed as emotions. For example, when the user returns home after going out, a smiling facial expression or a smiling eye shape may be displayed on the display 120. Accordingly, an effect can be obtained in which the user feels a sense of interaction with the robot 1.

The input unit 125 may be configured to receive a control command for controlling the robot 1 from the user. For example, the control command may be a command for changing various settings of the robot 1. For example, the settings may include a voice volume, display brightness, power saving mode settings, and the like.

The input unit 125 may be disposed on the display 120.

The input unit 125 generates key input data input by the user to control the operation of the robot 1. For this purpose, the input unit 125 may be composed of a key pad, a dome switch, a touch pad (resistive/capacitive), and the like. In particular, when the touch pad forms a mutual layer structure with the display 120, this may be referred to as a touch screen.

The communication unit 710 may be provided for signal transmission between various components inside the robot 1. The communication unit 710 may support, for example, Controller Area Network (CAN) communication. The signal may be, for example, a control command transmitted from the control unit 700 to other components.

The communication unit 710 may support wireless communication with other devices existing outside the robot 1. As a wireless communication module for supporting wireless communication, a short-range communication module or a long-range communication module may be provided.

The short-range communication may be, for example, Bluetooth communication, Near Field Communication (NFC), or the like.

The long-range communication may be, for example, Wireless LAN (WLAN), Digital Living Network Alliance (DLNA), Wireless Broadband (Wibro), World Interoperability for Microwave Access (Wimax), Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTE-A), Wireless Mobile Broadband Service (WMBS), Bluetooth Low Energy (BLE), Zigbee, Radio Frequency (RF), Long Range (LoRa), or the like.

The memory 720 is a component in which various data for driving and operation of the robot 1 are stored.

The memory 720 may store application programs for autonomous driving of the robot 1 and various related data. The memory 720 may also store each piece of data sensed by the sensing unit 600, and may store setting information regarding various settings selected or input by a user.

The memory 720 may include magnetic storage media or flash storage media, but the scope of the present invention is not limited thereto. The memory 720 may include internal memory and/or external memory, and may include volatile memory such as DRAM, SRAM, or SDRAM; non-volatile memory such as One Time Programmable ROM (OTPROM), PROM, EPROM, EEPROM, mask ROM, flash ROM, NAND flash memory, or NOR flash memory; a flash drive such as a Solid State Drive (SSD), a Compact Flash (CF) card, an SD card, a Micro-SD card, a Mini-SD card, an Xd card, or a memory stick; or a storage device such as an HDD.

The memory 720 may be included in the control unit 700 or may be provided as a separate component.

The battery 800 is configured to supply power to other components forming the robot 1.

The battery 800 may be disposed in the robot body 100. More specifically, the battery 800 may be accommodated inside the body housing 110. Although not shown, the battery 800 may be disposed further rearward than the suspension motor MS.

The battery 800 may be charged by an external power source, and for this purpose, a charging terminal 130 for charging the battery 800 may be provided at one side of the robot body 100. As in the embodiment of the present invention, the charging terminal 130 may be disposed at a lower portion of the robot body 100. Accordingly, the robot 1 can be easily coupled to a charging station by approaching the charging station and descending, such that the charging terminal 130 is seated onto a corresponding terminal of the charging station from above.

### Base Posture of Robot

The robot 1 can travel on the ground in a preset base posture as shown in FIG. 1. The base posture may refer to a posture of the robot 1 in a state where a specific event has not occurred. The specific event may be generated by a change in an external environment in which the robot 1 travels, a user's control command, or whether a condition preset in the robot 1 is satisfied/unsatisfied.

In the base posture, the connection portion 420 of the arm 400 may be disposed at an upper side of the robot body 100. More specifically, in the base posture, the connection portion 420 may be disposed further from the ground than the robot body 100 is. With this configuration, a user can easily lift the robot 1 by gripping the connection portion 420. This can assist the user in easily transporting the robot 1 and allow for rapid movement of the robot 1 to another space. In other words, the arm 400 can be provided to the user as a handle.

In the base posture, the connection portion 420 of the arm 400 may be disposed at the rear of the robot body 100. Preferably, in the base posture, the connection portion 420 may be disposed further rearward than the robot mask unit 500. Accordingly, when the user looks at the robot 1, it is possible to prevent the visibility of the display 120 from being degraded due to the robot mask unit 500 being obscured by the arm 400.

In the base posture, balance control can be performed so that the robot 1 does not fall forward or backward. In this case, the balance control refers to a control of rotating the wheel 310 forward or backward by driving the wheel motor MW according to a degree of tilting of the robot 1.

If the robot 1 is in a state of being tilted further forward than a tilt of the preset base posture, the wheel motor MW may be driven to rotate the wheel 310 backward so that the robot 1 returns to the base posture.

If the robot 1 is in a state of being tilted further backward than the tilt of the preset base posture, the wheel motor MW may be driven to rotate the wheel 310 forward so that the robot 1 returns to the base posture.

Meanwhile, as described above, the degree of tilting of the robot 1 can be measured by the IMU sensor 650.

The robot 1 travels on the ground using the rotational driving of the wheel 310 while maintaining the aforementioned base posture. When a travel obstacle located in a travel path of the wheel 310 is detected, the robot 1 can perform a corresponding motion according to the type of the travel obstacle.

In this case, the travel obstacle exists in the travel path of the robot 1 and refers to an object such as an obstacle or a cliff that may cause an accident, such as a collision or a fall, when the robot 1 continues to travel in the base posture.

Such a travel obstacle can be detected by the sensing unit 600.

More specifically, the depth camera 610b can detect the travel obstacle. Alternatively, the cliff sensor 660 can detect the travel obstacle.

In the robot 1 according to an embodiment of the present invention, when a corresponding motion for a travel obstacle is performed, rotational driving of the arm 400 (which may also be referred to as a rotational motion of the arm 400) can be essentially performed. At this time, an operation in which a position of the connection portion 420 is changed by the rotational driving of the arm 400 may be involved.

In an embodiment of the present invention, the leg unit 200 of the robot 1 may include an upper link and a lower link.

The upper link may be defined as a concept including the first link 210 and the second link 220, which are link structures disposed on a side of the robot body 100. The lower link may be defined as a concept including the third link 230, which is a link structure disposed on a side of the wheel 310.

The upper link and the lower link are link-coupled to each other to form a joint structure. Through movement of the joint structure, the robot body 100 can be moved upward or downward during travel.

More specifically, a constant coupling angle can be maintained between the upper link and the lower link in the base posture of the robot 1. Here, the coupling angle between the upper link and the lower link may refer to a coupling angle between the first link 210 and the third link 230. The coupling angle may refer to an acute angle formed by the first link 210 and the third link 230 based on a connection point between the first link 210 and the third link 230.

Adjustment of the coupling angle, that is, the movement of the aforementioned joint structure, can be implemented by controlling the driving of the suspension motor MS. As the suspension motor MS is driven to rotate and the coupling angle decreases, the robot body 100 can descend toward the ground. As the suspension motor MS rotates and the coupling angle increases, the robot body 100 can ascend in a direction opposite to the ground.

Meanwhile, as previously described, in the base posture of the robot 1, the coupling angle can be maintained at a magnitude formed by a restoring force of the gravity compensation unit. Since the restoring force of the gravity compensation unit acts, rotational driving of the suspension motor MS for maintaining the base posture is unnecessary.

### Detection of Unsafe State

In an embodiment of the present invention, an unsafe state of the robot 1 may be defined as a state in which the robot 1 is lifted or a state in which the robot 1 has fallen (toppled over).

The state in which the robot 1 is lifted may refer to a state in which at least one wheel 310 is separated from the ground.

For example, this corresponds to a case where only the left wheel 310 is lifted from the ground, only the right wheel 310 is lifted from the ground, or both wheels are lifted from the ground.

The state in which the robot 1 has fallen may refer to a state in which the robot body 100 deviates from a predetermined tilt angle. The tilt angle of the robot body 100 may be measured by a tilt sensor 650. The tilt sensor 650 may be an IMU sensor 650. Meanwhile, the tilt angle of the robot body 100 mentioned in the present invention refers to an angle formed between the robot body 100 and the ground. Here, the predetermined tilt angle may be appropriately preset to a numerical value at which it can be determined that the robot 1 is in a fallen state. In an embodiment of the present invention, the predetermined tilt angle may be defined as a fall angle.

For example, this corresponds to a case where the robot 1 falls forward, backward, or sideways. In this case, since the left or right wheel 310 is separated from the ground when the robot falls sideways, this may appear as a state overlapping with the state in which the robot 1 is lifted.

The control unit 700 may determine whether the robot 1 is currently in an unsafe state by measuring a plurality of sensing parameters at a predetermined time interval from a first time point t1. Here, the predetermined interval may be, for example, 10 ms.

When it is determined that the robot 1 is currently in an unsafe state, the control unit 700 may perform preset safety control. In this case, the safety control may include control for stopping the rotation of the wheel 310. If the rotation of the wheel 310 is maintained in an unsafe state, a safety accident for a user may be caused. In another embodiment, the safety control may refer to control for stopping the driving of all motors included in the robot 1.

The plurality of sensing parameters may include a first parameter Par1, which is a load current value of the suspension motor MS. The first parameter Par1 may be measured by the control unit 700.

The first parameter Par1 has a small value in a state where the suspension motor MS is not driven. As described above, in a state where the wheel 310 travels on the ground, the coupling angle between the upper and lower links is maintained by the gravity compensation unit. Therefore, when the wheel 310 normally travels on the ground, the suspension motor MS does not need to be driven, and the first parameter Par1 has a small value. On the contrary, when the robot 1 is lifted, the coupling angle between the upper and lower links instantaneously increases. At this time, the control unit 700 drives the suspension motor MS so that the coupling angle between the upper and lower links can be maintained. That is, in the unsafe state where the robot 1 is lifted, the value of the first parameter Par1 increases.

The plurality of sensing parameters may include a second parameter Par2, which is a tilt angle of the robot body 100.

The second parameter Par2 has a large value in a state where the robot body 100 is tilted in any one of forward, backward, left, and right directions and falls to the ground. That is, in the unsafe state where the robot 1 falls, the value of the second parameter Par2 increases.

The plurality of sensing parameters may include a third parameter Par3, which is a measurement value of the cliff sensor 660.

Since the third parameter Par3 is the distance to the ground measured by the cliff sensor 660, the value of the third parameter Par3 increases in the unsafe state where the robot 1 is lifted.

The plurality of sensing parameters may include a fourth parameter Par4, which is a load current value of the wheel motor MW. The fourth parameter Par4 may be measured by the control unit 700.

The fourth parameter Par4 has a smaller value in a state where the wheel 310 is separated from the ground than in a state where the wheel 310 travels on the ground. That is, in the unsafe state where the robot 1 is lifted, the value of the fourth parameter Par4 becomes a value satisfying a specific condition (e.g., decreasing).

When a preset condition corresponding to each of the sensing parameters is satisfied, the control unit 700 may detect this as a counting situation and increase a safety count.

The preset condition for the first parameter Par1 may be defined as being satisfied when the first parameter Par1 is greater than or equal to a first threshold current value. That is, when the first parameter Par1 is greater than or equal to the first threshold current value, it may be detected as a counting situation.

The preset condition for the second parameter Par2 may be defined as being satisfied when the second parameter Par2 is greater than or equal to a fall angle. That is, when the second parameter Par2 is greater than or equal to the fall angle, it may be detected as a counting situation.

The preset condition for the third parameter Par3 may be defined as being satisfied when the third parameter Par3 is greater than or equal to a threshold distance. That is, when the third parameter Par3 is greater than or equal to the threshold distance, it may be detected as a counting situation.

The preset condition for the fourth parameter Par4 may be defined as being satisfied when the fourth parameter Par4 is less than or equal to a second threshold current value. That is, when the fourth parameter Par4 is less than or equal to the second threshold current value, it may be detected as a counting situation.

The sensing parameters may include a primary sensing parameter and an auxiliary sensing parameter.

In an embodiment of the present invention, the first parameter Par1 and the second parameter Par2 may be primary sensing parameters, and the third parameter Par3 and the fourth parameter Par4 may be auxiliary sensing parameters.

The control unit 700 may determine that the robot 1 is currently in an unsafe state at a second time point t2 when a safety count, which is counted by the first to fourth parameters Par1 to Par4, becomes greater than or equal to a predetermined value. The predetermined value of the safety count for determining the unsafe state may be, for example, 200.

The control unit 700 may vary an increment of the safety count according to the type of the sensing parameter.

More specifically, the control unit 700 may increase the safety count by a larger amount when a counting situation for a primary sensing parameter is detected than when a counting situation for an auxiliary sensing parameter is detected. For example, when the counting situation for the primary sensing parameter is detected, the safety count may be increased by 2. For example, when the counting situation for the auxiliary sensing parameter is detected, the safety count may be increased by 1, which is smaller than 2.

The control unit 700 increases the safety count when a counting situation for the primary sensing parameter is detected, and may increase the safety count when a counting situation for the auxiliary sensing parameter is detected only when the counting situation is detected together with another sensing parameter.

More specifically, the control unit 700 may increase the safety count even when a counting situation is detected independently for the first parameter Par1 and the second parameter Par2.

On the contrary, when a counting situation for the third parameter Par3 is detected independently, the control unit 700 does not increase the safety count, and may increase the safety count only when the counting situation is simultaneously detected together with any one of the other parameters Par1, Par2, and Par4.

Similarly, when a counting situation for the fourth parameter Par4 is detected independently, the control unit 700 does not increase the safety count, and may increase the safety count only when the counting situation is simultaneously detected together with any one of the other parameters Par1, Par2, and Par3.

In an embodiment of the present invention, the safety count is always increased by 2 or more. If the safety count is measured at an interval of 10 ms while the safety count is increased by 2, it takes 1000 ms (1 second) for the safety count to reach 200. That is, the time until the safety control starts to be performed does not exceed a maximum of 1 second.

When all sensing parameters are in the counting situation simultaneously, the safety count is increased by 6. If the safety count is measured at an interval of 10 ms while the safety count is increased by 6, it takes 0.33 seconds for the safety count to reach 200.

That is, it can be seen that in an embodiment of the present invention, the time required from the first time point t1, at which the measurement of the sensing parameters starts, to the second time point t2, at which the performance of the safety control starts, varies depending on the types of the sensing parameters and the number of sensing parameters being counted.

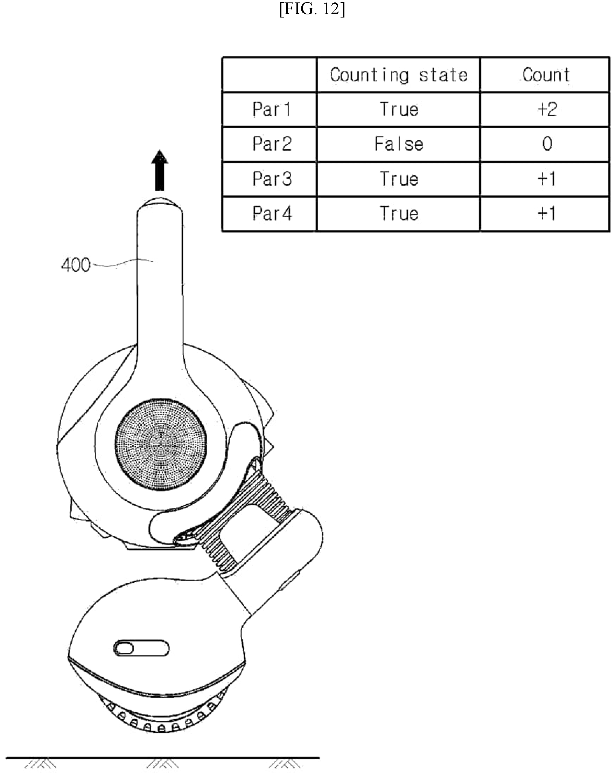

FIGS. 12 to 20 illustrate various types of unsafe states that can be detected in an embodiment of the present invention.

FIG. 12 illustrates a situation in which a user grips the arm 400 and lifts the robot 1. As the robot 1 is lifted, the wheel 310 is separated from the ground. In addition, as the robot 1 is lifted, the suspension motor MS is driven to maintain a coupling angle between the upper and lower links. Further, as the robot 1 is lifted, a distance between the cliff sensor 660 and the ground increases.

Accordingly, in the situation of FIG. 12, the first parameter Par1, the third parameter Par3, and the fourth parameter Par4 enter a counting situation. Since the first parameter Par1 is a primary sensing parameter, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 4 at each interval. In a measurement interval of 10 ms, it takes 0.5 seconds for the safety count to reach 200. That is, if the robot 1 is not lowered back to the ground within 0.5 seconds, the control unit 700 can perform safety control to stop the rotational driving of the wheel. In another embodiment, the control unit 700 may perform safety control to stop the driving of all motors included in the robot 1.

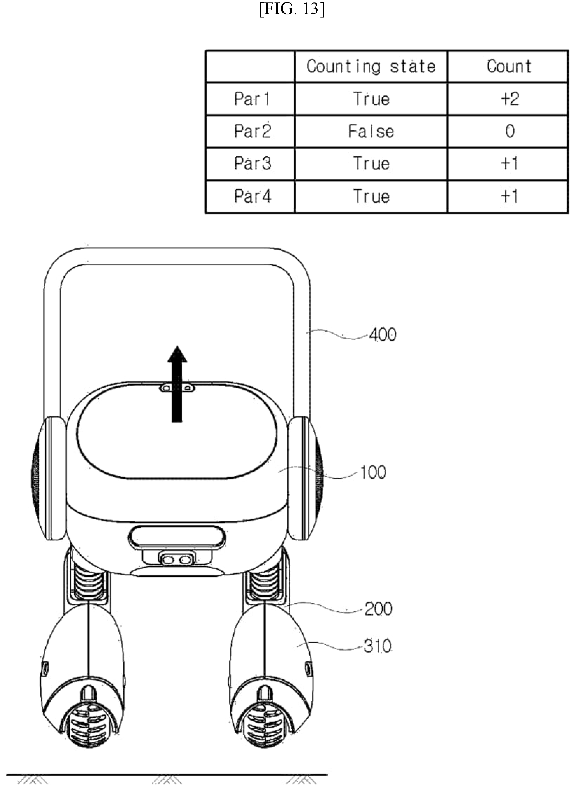

FIG. 13 illustrates a situation in which a user grips the robot body 100 and lifts the robot 1. As the robot 1 is lifted, the wheel 310 is separated from the ground. In addition, as the robot 1 is lifted, the suspension motor MS is driven to maintain the coupling angle between the upper and lower links. Further, as the robot 1 is lifted, the distance between the cliff sensor 660 and the ground increases.

Accordingly, in the situation of FIG. 13, the first parameter Par1, the third parameter Par3, and the fourth parameter Par4 enter a counting situation. Since the first parameter Par1 is a primary sensing parameter, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 4 at each interval. In a measurement interval of 10 ms, it takes 0.5 seconds for the safety count to reach 200. That is, if the robot 1 is not lowered back to the ground within 0.5 seconds, the control unit 700 can perform safety control to stop the rotational driving of the wheel 310. In another embodiment, the control unit 700 may perform safety control to stop the driving of all motors included in the robot 1.

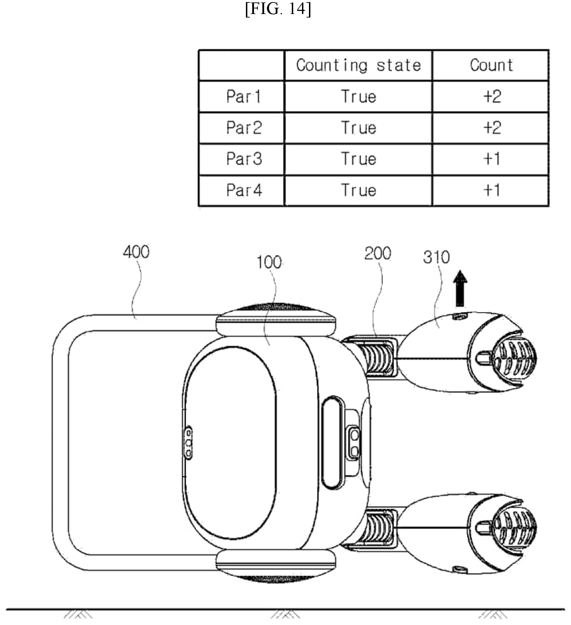

FIG. 14 illustrates a situation in which a user grips one wheel 310 of the robot 1 and lifts the robot 1 in a state where the robot 1 has fallen sideways. As the robot 1 is lifted, the wheel 310 is separated from the ground. In addition, as the robot 1 is lifted, the suspension motor MS is driven to maintain the coupling angle between the upper and lower links. Further, as the robot 1 is lifted, the distance between the cliff sensor 660 and the ground increases. Furthermore, since the robot 1 is tilted sideways, a tilt angle of the robot body 100 becomes greater than or equal to a fall angle.

Accordingly, in the situation of FIG. 14, all of the first parameter Par1 to the fourth parameter Par4 enter the counting situation. Since the first parameter Par1 and the second parameter Par2 are primary sensing parameters, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 6 at each interval. In a measurement interval of 10 ms, it takes 0.33 seconds for the safety count to reach 200. That is, if the robot 1 is not lowered back to the ground (meaning being lowered to the base posture) within 0.33 seconds, the control unit 700 can perform safety control to stop the rotational driving of the wheel 310. In another embodiment, the control unit 700 may perform safety control to stop the driving of all motors included in the robot 1.

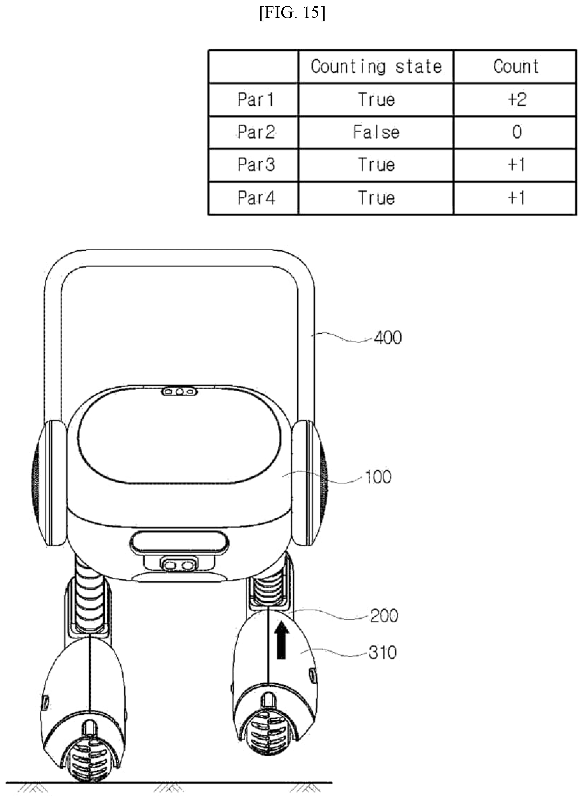

FIG. 15 illustrates a situation in which a user grips one leg unit 200 of the robot 1 and lifts the robot 1 while maintaining the base posture such that a tilt angle of the robot body 100 does not tilt. As the robot 1 is lifted, the wheel 310 is separated from the ground. In addition, as the robot 1 is lifted, the suspension motor MS of the leg unit 200 that is not gripped is driven to maintain a coupling angle between the upper and lower links. Further, as the robot 1 is lifted, a distance between the cliff sensor 660 and the ground increases.

Accordingly, in the situation of FIG. 15, the first parameter Par1, the third parameter Par3, and the fourth parameter Par4 enter the counting situation. Since the first parameter Par1 is a primary sensing parameter, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 4 at each interval. In a measurement interval of 10 ms, it takes 0.5 seconds for the safety count to reach 200. That is, if the robot 1 is not lowered back to the ground within 0.5 seconds, the control unit 700 can perform safety control to stop the rotational driving of the wheel 310. In another embodiment, the control unit 700 may perform safety control to stop the driving of all motors included in the robot 1.

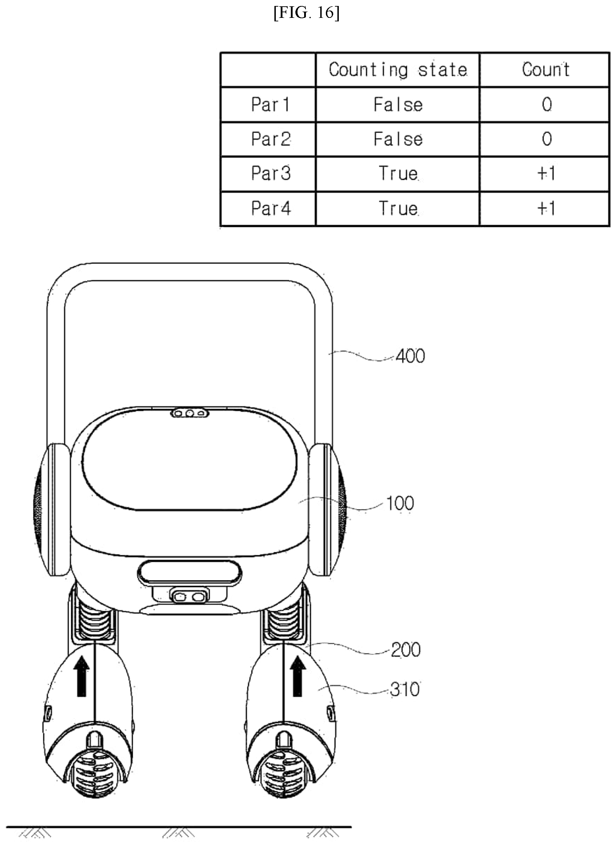

FIG. 16 illustrates a situation in which a user grips both leg units 200 of the robot 1 and lifts the robot 1 while maintaining the base posture such that the tilt angle of the robot body 100 does not tilt. As the robot 1 is lifted, the wheel 310 is separated from the ground. Further, as the robot 1 is lifted, the distance between the cliff sensor 660 and the ground increases.

Accordingly, in the situation of FIG. 16, the third parameter Par3 and the fourth parameter Par4 enter the counting situation. Although the third parameter Par3 and the fourth parameter Par4 are auxiliary sensing parameters, the safety count can be increased because they have entered the counting situation simultaneously with other sensing parameters.

As a result, the safety count is increased by 2 at each interval. In a measurement interval of 10 ms, it takes 1 second for the safety count to reach 200. That is, if the robot 1 is not lowered back to the ground within 1 second, the control unit 700 can perform safety control to stop the rotational driving of the wheel 310. In another embodiment, the control unit 700 may perform safety control to stop the driving of all motors included in the robot 1.

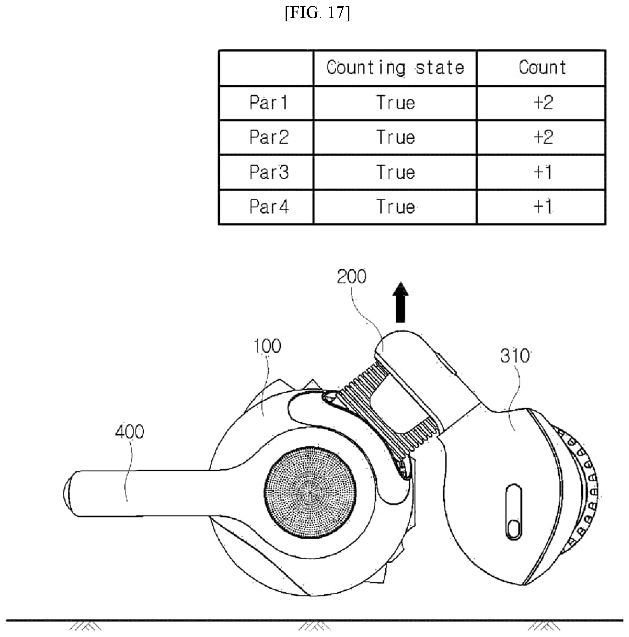

FIG. 17 illustrates a situation in which a user grips both leg units 200 and lifts the robot 1 in a state where the robot 1 has fallen forward. Here, gripping the leg unit 200 means gripping the upper link or the lower link. As the robot 1 is lifted, the wheel 310 is separated from the ground. In addition, as the robot 1 is lifted, the distance between the cliff sensor 660 and the ground increases. Furthermore, since the robot 1 is tilted forward, the tilt angle of the robot body 100 becomes greater than or equal to the fall angle. Also, the suspension motor MS of the leg unit 200 is driven to maintain the coupling angle between the upper and lower links.

Accordingly, in the situation of FIG. 17, all of the first parameter Par1 to the fourth parameter Par4 enter the counting situation. Since the first parameter Par1 and the second parameter Par2 are primary sensing parameters, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 6 at each interval. In a measurement interval of 10 ms, it takes 0.33 seconds for the safety count to reach 200. That is, if the robot 1 is not lowered back to the ground within 0.33 seconds, the control unit 700 can perform safety control to stop the rotational driving of the wheel 310. In another embodiment, the control unit 700 may perform safety control to stop the driving of all motors included in the robot 1.

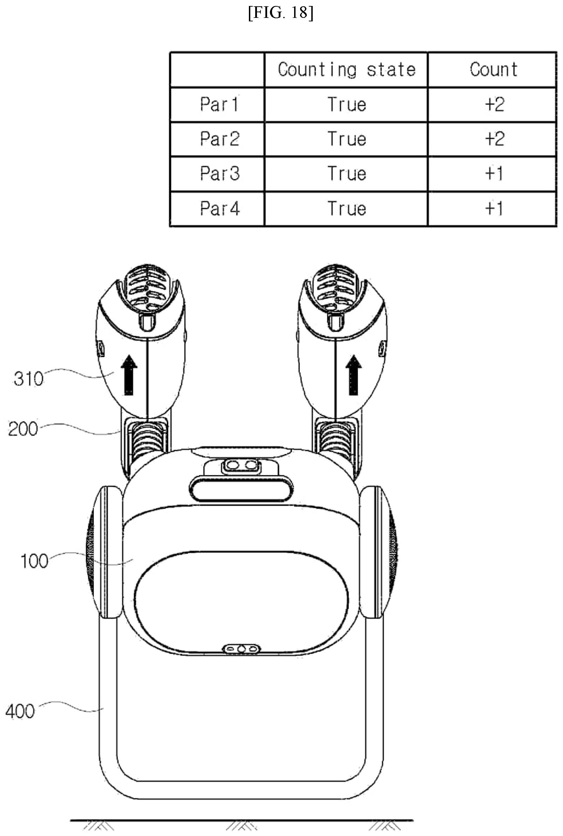

FIG. 18 illustrates a situation in which a user grips both leg units 200 and lifts the robot 1 in a state where the robot 1 is overturned. Here, gripping the leg unit 200 means gripping the upper link or the lower link. As the robot 1 is lifted, the wheel 310 is separated from the ground. In addition, as the robot 1 is lifted, the distance between the cliff sensor 660 and the ground increases. Furthermore, since the robot 1 is overturned, the tilt angle of the robot body 100 becomes greater than or equal to the fall angle. Also, the suspension motor MS of the leg unit 200 is driven to maintain the coupling angle between the upper and lower links.

Accordingly, in the situation of FIG. 18, all of the first parameter Par1 to the fourth parameter Par4 enter the counting situation. Since the first parameter Par1 and the second parameter Par2 are primary sensing parameters, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 6 at each interval. In a measurement interval of 10 ms, it takes 0.33 seconds for the safety count to reach 200. That is, if the robot 1 is not lowered back to the ground within 0.33 seconds, the control unit 700 can perform safety control to stop the rotational driving of the wheel 310. In another embodiment, the control unit 700 may perform safety control to stop the driving of all motors included in the robot 1.

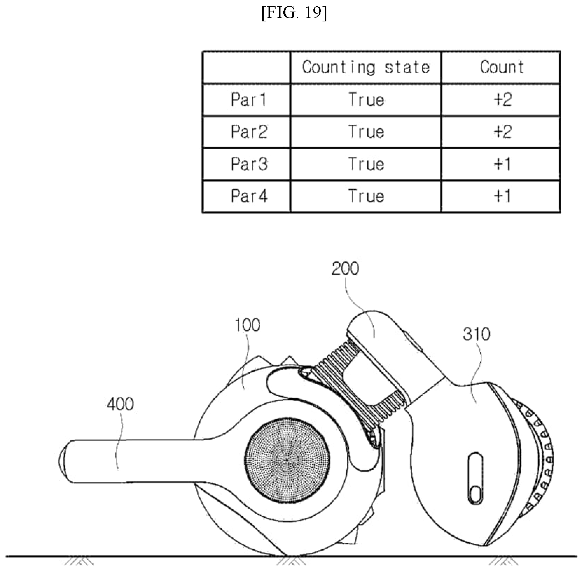

FIG. 19 illustrates a situation in which the robot 1 has fallen forward. As the robot body 100 comes into contact with the ground, the wheel 310 is separated from the ground or idles, so that the load current of the wheel 310 decreases. In addition, the distance to the ground measured by the cliff sensor 660 provided in the leg unit 200 increases. Furthermore, since the robot 1 is in a state of having fallen forward, the tilt angle of the robot body 100 becomes greater than or equal to the fall angle. Also, since gravity (from the body weight) does not act (on the legs), the suspension motor MS of the leg unit 200 is driven to maintain the coupling angle between the upper and lower links.

Accordingly, in the situation of FIG. 19, all of the first parameter Par1 to the fourth parameter Par4 enter the counting situation. Since the first parameter Par1 and the second parameter Par2 are primary sensing parameters, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 6 at each interval. In a measurement interval of 10 ms, it takes 0.33 seconds for the safety count to reach 200. That is, if the robot 1 is not lowered back to the ground within 0.33 seconds, the control unit 700 can perform safety control to stop the rotational driving of the wheel 310. In another embodiment, the control unit 700 may perform safety control to stop the driving of all motors included in the robot 1.

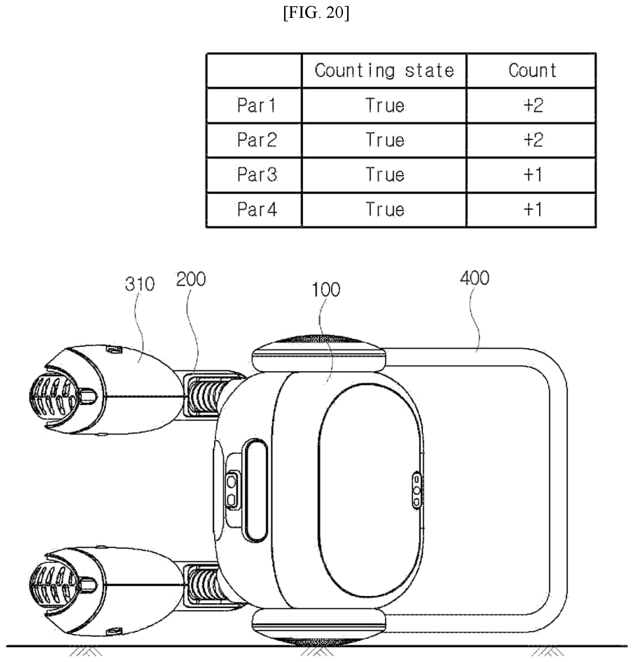

FIG. 20 illustrates a situation in which the robot 1 has fallen sideways. As either the left or right wheel 310 is separated from the ground, the load current of the wheel 310 decreases. In addition, the distance to the ground measured by the cliff sensor 660 provided in the leg unit 200 increases. Furthermore, since the robot 1 is in a state of having fallen sideways, the tilt angle of the robot body 100 becomes greater than or equal to the fall angle. Also, since gravity does not act on the leg unit 200 that is not in contact with the ground, the suspension motor MS of the leg unit 200 is driven to maintain the coupling angle between the upper and lower links.

Accordingly, in the situation of FIG. 20, all of the first parameter Par1 to the fourth parameter Par4 enter the counting situation. Since the first parameter Par1 and the second parameter Par2 are primary sensing parameters, the safety count can be increased independently. Although the third parameter Par3 and the fourth parameter Par4 are auxiliary sensing parameters, the safety count can be increased because they have entered the counting situation simultaneously with other sensing parameters.

As a result, the safety count is increased by 6 at each interval. In a measurement interval of 10 ms, it takes 0.33 seconds for the safety count to reach 200. That is, if the robot 1 is not lowered back to the ground within 0.33 seconds, the control unit 700 can perform safety control to stop the rotational driving of the wheel 310. In another embodiment, the control unit 700 may perform safety control to stop the driving of all motors included in the robot 1.

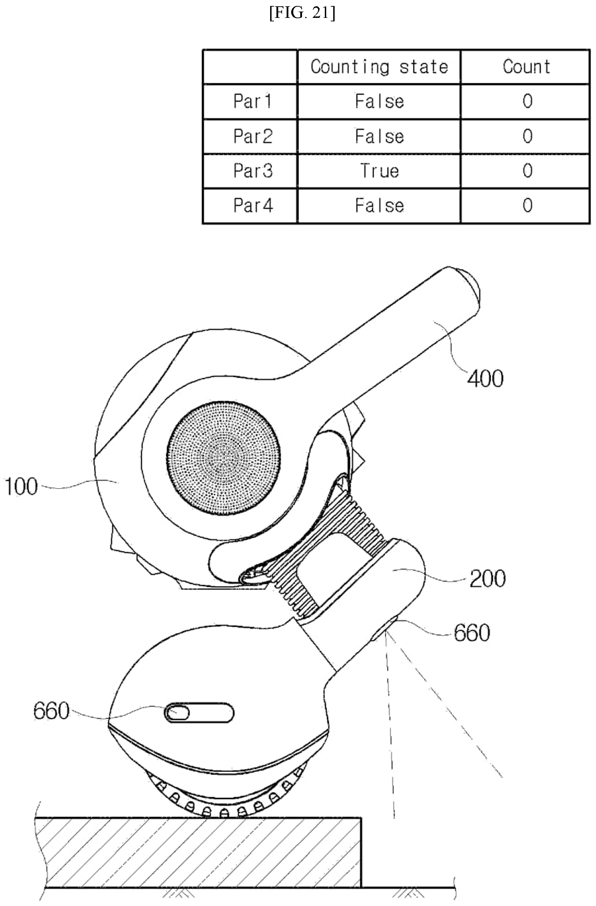

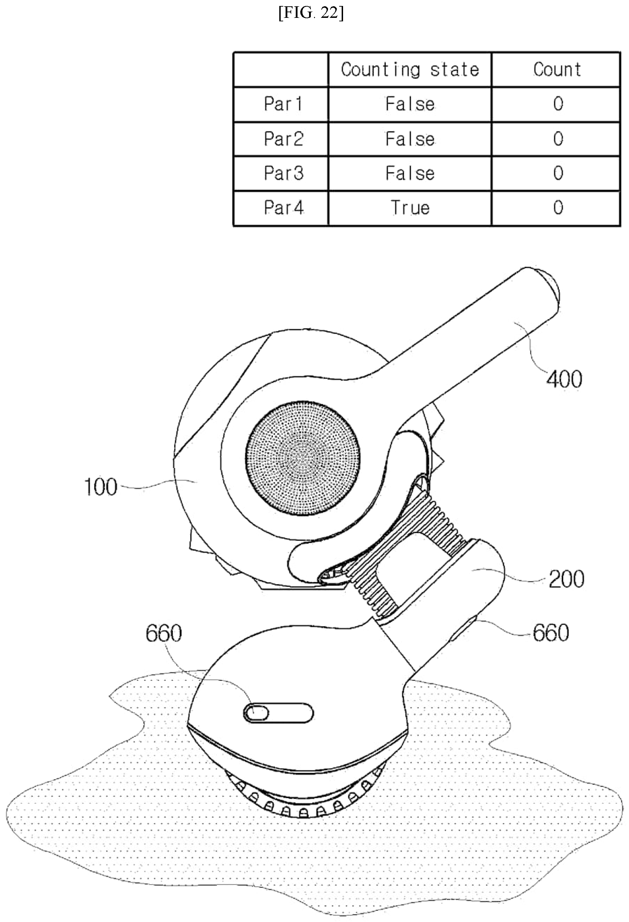

FIGS. 21 and 22 are views for explaining cases that are not determined as an unsafe state in an embodiment of the present invention.

FIG. 21 illustrates a situation in which the cliff sensor 660 detects a cliff. This is a situation that occurs during normal travel and should not be determined as an unsafe state. In the situation of FIG. 21, only the third parameter Par3, which is an auxiliary sensing parameter, enters the counting situation. However, since the third parameter Par3 alone cannot increase the safety count, the safety count is not increased, and even if this state persists for a long time, it is not determined as an unsafe state.

FIG. 22 illustrates a situation in which the load current of the wheel motor MW decreases due to a change in the frictional force of the floor. For example, it may be a situation such as encountering a water puddle on a travel path or a change in floor material. This is a situation that occurs during normal travel and should not be determined as an unsafe state. In the situation of FIG. 22, only the fourth parameter Par4, which is an auxiliary sensing parameter, enters the counting situation. However, since the fourth parameter Par4 alone cannot increase the safety count, the safety count is not increased, and even if this state persists for a long time, it is not determined as an unsafe state.

## Claims

1. A robot comprising:
a robot body in which a battery is accommodated;
a pair of wheel units disposed at a lower portion of the robot body and including wheels that perform rolling travel while in contact with a ground;
a pair of leg units connected between the robot body and the wheel units; and
a control unit configured to determine whether the robot is in an unsafe state by measuring a plurality of sensing parameters at a predetermined time interval from a first time point (t1) and to perform a preset safety control;
wherein the control unit is configured to:
detect a counting situation and increase a safety count when a preset condition corresponding to each of the sensing parameters is satisfied at every measurement interval of the sensing parameters; and
determine that the robot is in the unsafe state and perform the safety control at a second time point (t2) when the safety count becomes greater than or equal to a predetermined value,
wherein a time required from the first time point (t1) to the second time point (t2) varies depending on a type and a number of the sensing parameters for which the counting situation is detected.

2. The robot of claim 1, wherein the unsafe state is a state in which at least one of the wheels is separated from the ground, or a state in which the robot body deviates from a predetermined tilt angle.

3. The robot of claim 1, wherein the control unit is configured to vary an increment of the safety count according to the type of the sensing parameters.

4. The robot of claim 1, wherein the sensing parameters include a primary sensing parameter and an auxiliary sensing parameter, and
wherein the control unit is configured to:
increase the safety count when a counting situation for the primary sensing parameter is detected; and
increase the safety count when a counting situation for the auxiliary sensing parameter is detected only when the counting situation is detected together with another sensing parameter.

5. The robot of claim 1, wherein the sensing parameters include a primary sensing parameter and an auxiliary sensing parameter, and
wherein the control unit is configured to increase the safety count by a larger amount when a counting situation for the primary sensing parameter is detected than when a counting situation for the auxiliary sensing parameter is detected.

6. The robot of claim 1, further comprising a tilt sensor disposed on the robot body and configured to measure a tilt angle of the robot body,
wherein the sensing parameters include the tilt angle of the robot body.

7. The robot of claim 6, wherein the control unit is configured to detect the counting situation when the tilt angle of the robot body is greater than a preset angle.

8. The robot of claim 1, further comprising:
a suspension motor disposed in the robot body and driven to maintain a coupling angle between an upper link and a lower link constituting the leg unit within a predetermined coupling angle range,
wherein the sensing parameters include a load current value of the suspension motor.

9. The robot of claim 8, wherein the control unit is configured to detect the counting situation when the load current value of the suspension motor is greater than or equal to a preset current value.

10. The robot of claim 1, further comprising:
a wheel motor disposed in the wheel unit and driven to rotate the wheel,
wherein the sensing parameters include a load current value of the wheel motor.

11. The robot of claim 10, wherein the control unit is configured to detect the counting situation when the load current value of the wheel motor is less than or equal to a preset current value.

12. The robot of claim 1, further comprising:
a cliff sensor disposed in the wheel unit or the leg unit and configured to measure a distance from the ground,
wherein the sensing parameters include the distance from the ground.

13. The robot of claim 12, wherein the control unit is configured to detect the counting situation when the distance from the ground is greater than or equal to a preset distance.

14. The robot of claim 1, wherein the safety control includes a control for stopping the rotation of the wheel.

15. A robot comprising:
a robot body in which a battery is accommodated;
a pair of wheel units disposed at a lower portion of the robot body and including wheels that perform rolling travel while in contact with a ground; and
a control unit configured to determine whether the robot is in an unsafe state by measuring a plurality of sensing parameters at a predetermined interval and to perform a preset safety control;
wherein the sensing parameters include a primary sensing parameter and an auxiliary sensing parameter; and
wherein the control unit is configured to:
detect a counting situation and increase a safety count when a preset condition corresponding to each of the sensing parameters is satisfied; and
determine that the robot is in the unsafe state when the safety count becomes greater than or equal to a predetermined value,
wherein the control unit increases the safety count when a counting situation for the primary sensing parameter is detected, and increases the safety count when a counting situation for the auxiliary sensing parameter is detected only when the counting situation is detected together with another sensing parameter.

16. The robot of claim 15, wherein the unsafe state is a state in which at least one of the wheels is separated from the ground, or a state in which the robot body deviates from a predetermined tilt angle.

17. The robot of claim 15, further comprising:
a suspension motor disposed in the robot body and driven to maintain a coupling angle between an upper link and a lower link constituting a leg unit within a predetermined coupling angle range; and
a wheel motor disposed in the wheel unit and driven to rotate the wheel,
wherein the primary sensing parameter includes a load current value of the suspension motor, and
wherein the auxiliary sensing parameter includes a load current value of the wheel motor.
